# EUROPEAN PATENT APPLICATION

(11) **EP 4 761 406 A1**
(43) Date of publication of application: **17.06.2026**
(21) Application number: 23948698.8
(22) Date of filing: 11.08.2023
(51) Int. Cl.: H04W 72/0446

(54) **WIRELESS COMMUNICATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN); TIAN, Wenqiang, Dongguan, Guangdong 523860 (CN)
(74) Representative: Penza, Giancarlo
(86) International application number: PCT/CN2023/112522
(87) International publication number: WO 2025/035256

(57) **Abstract**

Provided are a wireless communication method and apparatus, a terminal device, and a network device. The method includes: a terminal device determines, on the basis of model application time reported to a network device, or on the basis of model application time configured by the network device, a moment when a first AI model starts to be applied; and after the moment, the terminal device uses the first AI model to communicate with the network device.

## Description

### TECHNICAL FIELD

Embodiments of the present disclosure relate to the technical field of mobile communications, and in particular to a wireless communication method and apparatus, a terminal device, and a network device.

### BACKGROUND

In view of the great success of Artificial Intelligence (AI) technology in areas such as computer vision and natural language processing, the field of communications has begun to explore the application of the AI technology to find novel technical approaches for solving the technical problems limited by conventional methods.

When the AI models are applied to wireless communication, the AI models can be categorized into single-end models and dual-end models. The dual-end models need to be deployed in pairs on a terminal device side and a network device side. For example, the AI model used for Channel State Information (CSI) feedback is a typical dual-end model, where the terminal device can use the obtained channel information (such as feature vectors, beam information, delay information, etc.) as the input of the AI model, and further infer the corresponding CSI quantization bits through the AI model. Accordingly, the corresponding AI model on the network device side can take the CSI quantization bits as input, and perform reverse inference to obtain the corresponding channel information.

For the dual-end model, if the performance of the current AI model on the terminal device side is poor, the network device may instruct, through signaling, the terminal device to update the model (e.g., by replacing the AI model or adjusting the model parameter). In this case, the network device also needs to update the model accordingly, to maintain mutual compatibility between the AI models on both sides. If the updates of the AI models on both sides are not completely synchronized, it can lead to incorrect output from the AI model at the receiving end, thus affecting the information transmission between the terminal device and the network device. How to ensure the synchronous model update between the network device and the terminal device is a problem that needs to be solved.

### SUMMARY

Embodiments of the present disclosure provide an information transmission method and apparatus, a terminal device, and a network device.

According to a first aspect, a wireless communication method is provided in an embodiment of the present disclosure, and the method includes the following operations.

A terminal device determines a time moment at which a first artificial intelligence (AI) model starts to be applied based on a model application time reported to a network device, or based on a model application time configured by the network device.

The terminal device communicates, after the time moment, with the network device by using the first AI model.

According to a second aspect, a wireless communication method is provided in an embodiment of the present disclosure, and the method includes the following operations.

A network device determines a time moment at which a first artificial intelligence (AI) model starts to be applied based on a model application time reported by a terminal device, or based on a model application time configured for the terminal device.

The network device communicates, after the time moment, with the terminal device by using a second AI model corresponding to the first AI model.

According to a third aspect, a wireless communication apparatus is provided in an embodiment of the present disclosure, and the wireless communication apparatus is applied to a terminal device. The apparatus includes a first determination unit and a first communication unit.

The first determination unit is configured to determine a time moment at which a first artificial intelligence (AI) model starts to be applied based on a model application time reported to a network device, or based on a model application time configured by the network device.

The first communication unit is configured to communicate, after the time moment, with the network device by using the first AI model.

According to a fourth aspect, a wireless communication apparatus is provided in the embodiment of the present disclosure, and the wireless communication apparatus is applied to a network device. The apparatus includes a second determination unit and a second communication unit.

The second determination unit is configured to determine a time moment at which a first artificial intelligence (AI) model starts to be applied based on a model application time reported by a terminal device, or based on a model application time configured for the terminal device.

The second communication unit is configured to communicate, after the time moment, with the terminal device by using a second AI model corresponding to the first AI model.

According to a fifth aspect, a terminal device is provided in an embodiment of the present disclosure, and the terminal device includes a memory and a processor. The memory is configured to store a computer program, and the processor is configured to call and run the computer program stored in the memory to perform the aforementioned wireless communication method.

According to a sixth aspect, a network device is provided in an embodiment of the present disclosure, and the network device includes a memory and a processor. The memory is configured to store a computer program, and the processor is configured to call and run the computer program stored in the memory to perform the aforementioned wireless communication method.

A chip is provided by an embodiment of the present disclosure, and the chip is configured to implement the aforementioned wireless communication method.

Specifically, the chip includes a processor configured to call and run a computer program from a memory, to enable a device installed with the chip to perform the aforementioned wireless communication method.

A computer-readable storage medium is provided in an embodiment of the present disclosure, and the computer-readable storage medium is used for storing a computer program. Herein, the computer program causes a computer to perform the aforementioned wireless communication method.

A computer program product is provided in an embodiment of the present disclosure, and the computer program product includes computer program instructions that cause a computer to perform the aforementioned wireless communication method.

A computer program is provided in an embodiment of the present disclosure, and the computer program, when running on a computer, causes the computer to perform the aforementioned wireless communication method.

In the wireless communication method according to the embodiment of the present disclosure, when the terminal device side and the network device side adopt the corresponding dual-end AI models, if the AI model of the terminal device side is updated or reconfigured, the terminal device may determine the timing at which the updated or reconfigured AI model starts to be applied according to the model application time reported to the network device or according to the model application time configured by the network device. In this way, it can be ensured that the models on both sides start to be applied at the same time, thereby ensuring that the output of the AI model is available and improving the performance of the communication system.

### BRIEF DESCRIPTION OF THE DRAWINGS

The accompanying drawings illustrated herein are used to provide a further understanding of the present disclosure, and constitute a part of the present disclosure. The illustrative embodiments of the present disclosure and descriptions thereof are used to explain the present disclosure, and do not constitute any undue limitation of the present disclosure. In the drawings:
FIG. 1 is a schematic diagram of a communication architecture according to an embodiment of the present disclosure.
FIG. 2 is a schematic diagram of a neuron structure according to an embodiment of the present disclosure.
FIG. 3 is a schematic structural diagram of a neural network according to an embodiment of the present disclosure.
FIG. 4 is a schematic diagram of a neural network for CSI feedback according to an embodiment of the present disclosure.
FIG. 5 is a schematic flow diagram of a wireless communication method according to an embodiment of the present disclosure.
FIG. 6A is a first schematic diagram of a slot structure according to an embodiment of the present disclosure.
FIG. 6B is a second schematic diagram of a slot structure according to an embodiment of the present disclosure.
FIG. 7A is a third schematic diagram of a slot structure according to an embodiment of the present disclosure.
FIG. 7B is a fourth schematic diagram of a slot structure according to an embodiment of the present disclosure.
FIG. 8 is a fifth schematic diagram of a slot structure according to an embodiment of the present disclosure.
FIG. 9A is a sixth schematic diagram of a slot structure according to an embodiment of the present disclosure.
FIG. 9B is a seventh schematic diagram of a slot structure according to an embodiment of the present disclosure.
FIG. 9C is an eighth schematic diagram of a slot structure according to an embodiment of the present disclosure.
FIG. 10 is a schematic structural diagram of a wireless communication apparatus 1000 according to an embodiment of the present disclosure.
FIG. 11 is a schematic structural diagram of a wireless communication apparatus 1100 according to an embodiment of the present disclosure.
FIG. 12 is a schematic structural diagram of a communication device according to an embodiment of the present disclosure.
FIG. 13 is a schematic structural diagram of a chip according to an embodiment of the present disclosure.
FIG. 14 is a schematic block diagram of a communication system according to an embodiment of the present disclosure.

### DETAILED DESCRIPTION

The technical solutions in the embodiments of the present disclosure are described in the following with reference to the accompanying drawings in the embodiments of the present disclosure. It is apparent that the described embodiments are part of the embodiments of the present disclosure, but not all of the embodiments. Based on the embodiments of the present disclosure, all other embodiments obtained by those skilled in the art without creative efforts shall fall within the scope of protection of the present disclosure.

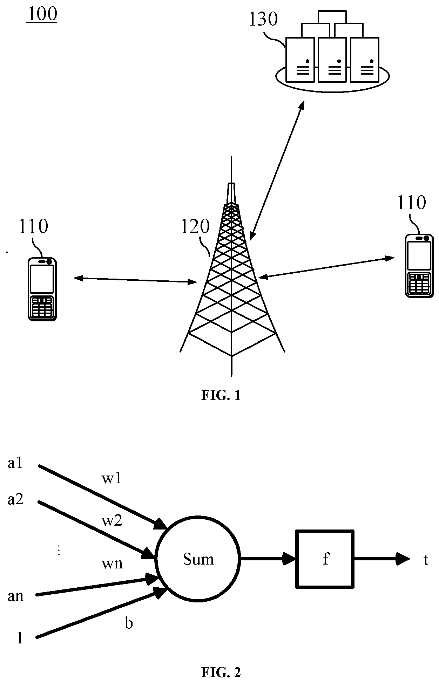

FIG. 1 is a schematic diagram of an application scenario of an embodiment of the present disclosure.

As shown in FIG. 1, a communication system 100 may include terminal device(s) 110 and a network device 120. The network device 120 may communicate with the terminal device(s) 110 through an air interface. Multi-service transmission is supported between the terminal device(s) 110 and the network device 120.

It should be understood that the embodiments of the present disclosure are only illustrated with reference to the communication system 100, but the embodiments of the present disclosure are not limited thereto. That is, the technical solutions in the embodiments of the present disclosure may be applied to various communication systems, such as a long term evolution (LTE) system, a LTE time division duplex (TDD) system, a universal mobile telecommunication system (UMTS) system, an Internet of Things (IoT) system, a narrow band Internet of Things (NB-IoT) system, an enhanced machine-type communications (eMTC) system, a 5G communication systems (also referred to as New Radio (NR) communication system), or a future communication system, etc.

In the communication system 100 illustrated in FIG. 1, the network device 120 may be an access network device that communicates with the terminal device(s) 110. The access network device may provide communication coverage for a specific geographic area, and may communicate with the terminal device(s) 110 (e.g., UE(s)) located within the coverage.

The network device 120 may be an Evolutional Node B (eNB, or eNodeB) in a LTE system, a Next Generation Radio Access Network (NG RAN) device, a base station (gNB) in an NR system, a radio controller in a Cloud Radio Access Network (CRAN). Or, the network device 120 may be a relay station, an access point, an in-vehicle device, a wearable device, a hub, a switch, a bridge, a router, or a network device in a future evolved Public Land Mobile Network (PLMN).

The terminal device 110 may be any terminal device, which includes, but not limited to, the terminal device connected with the network device 120 or other terminal devices through wired or wireless connections.

For example, the terminal device 110 may refer to an access terminal, user equipment (UE), a user unit, a user station, a mobile station, a mobile platform, a remote station, a remote terminal, a mobile device, a user terminal, a terminal, a wireless communication device, a user agent, or a user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with a wireless communication function, a computing device, another processing device connected to a wireless modem, a vehicle-mounted device, a wearable device, a terminal device in a 5G network, a terminal device in a future evolutional network, or the like.

The terminal device 110 may be used for device to device (D2D) communication.

The wireless communication system 100 may further include a core network device 130 that communicates with the network device 120. The core network device 130 may be a 5G Core (5GC) device, such as an access and mobility management function (AMF), an authentication server function (AUSF), a user plane function (UPF), or a session management function (SMF). Optionally, the core network device 130 may also be an evolved packet core (EPC) device in an LTE network, for example, a session management function + core packet gateway (SMF+PGW-C) device of the core network. It should be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

Various functional units in the communication system 100 may further establish connections through next generation (NG) interface(s) for realizing communication.

For example, the terminal device may establish an air interface connection with the access network device through an NR interface for transmitting user plane data and control plane signaling. The terminal device may establish a control plane signaling connection with the AMF through an NG interface 1 (referred to as N1). The access network device, such as a next generation wireless access base station (gNB), may establish a user plane data connection with the UPF through an NG interface 3 (referred to as N3). The access network device may establish a control plane signaling connection with the AMF through an NG interface 2 (referred to as N2). The UPF may establish a control plane signaling connection with the SMF through an NG interface 4 (referred to as N4). The UPF may interact user plane data with the data network through an NG interface 6 (referred to as N6). The AMF may establish a control plane signaling connection with the SMF through an NG interface 11 (referred to as N11). The SMF may establish a control plane signaling connection with the PCF through an NG interface 7 (referred to as N7).

One network device, one core network device and two terminal devices are exemplarily illustrated in FIG. 1. Optionally, the wireless communication system 100 may include multiple network devices, and another number of terminal devices may be included in the coverage range of each network device. No limits are made thereto in the embodiments of the present disclosure.

It should be noted that FIG. 1 is merely an illustrative example of the system in which the present disclosure is applied. Of course, the methods shown in the embodiments of the present disclosure may further be applied to other systems. In addition, the terms "system" and "network" are often used interchangeably in the present disclosure. The term "and/or" in the present disclosure only refers to an association relationship describing associated objects, and indicates that there may be three relationships. For example, A and/or B may indicate three cases: existence of A alone, existence of A and B simultaneously, and existence of B alone. Furthermore, the character "/" in the present disclosure generally indicates that the preceding and following associated objects are in an "or" relationship. It should also be understood that "indicate/indication" mentioned in the embodiments of the present disclosure may be direct indication or indirect indication, or may be indicative of an association relationship. For example, A indicates B, which may mean that A indicates B directly (e.g., B may be acquired through A), or may mean that A indicates B indirectly (e.g., A indicates C, and B may be acquired through C), or may mean that there is an association relationship between A and B. It should also be understood that "correspond/correspondence" mentioned in the embodiments of the present disclosure may mean that there is a direct correspondence relationship or an indirect correspondence relationship between two objects, or may mean that there is an association relationship between the two objects, or may mean that there are relationships of indicating and being indicated, configuring and being configured, and the like. It should also be understood that the "predefined" or "predefined rule(s)" mentioned in the embodiments of the present disclosure may be implemented by pre-storing corresponding code(s), table(s), or other ways that may be used to indicate related information in devices (e.g., including the terminal device and the network device), and the specific implementation(s) are not limited in the present disclosure. For example, the "predefined" may refer to those defined in a protocol. It should also be understood that, in the embodiments of the present disclosure, the term "protocol" may refer to a standard protocol in the field of communications, such as an LTE protocol, an NR protocol, and a related protocol applied in a future communication system, which is not limited in the present disclosure.

In order to facilitate the understanding of the technical solutions in the embodiments of the present disclosure, the related technologies of the embodiments of the present disclosure are described below. The related technologies below, as optional solution(s), may be combined with any one of the technical solutions in the embodiments of the present disclosure, and all of the combinations shall fall within the scope of protection of the embodiments of the present disclosure.

An AI model is a type of model capable of handling various tasks. The AI model has the capabilities of self-learning and self-adaptation, and can make dynamic adjustments and decisions according to environmental changes. The AI model may also be called a machine learning (ML) model, and the two terms may be equivalent or interchangeable.

In practical applications, the AI model may be composed of neural network(s). The neural network is a computational model composed of multiple interconnected neuron nodes, where the connection between the nodes represents a weighted value (which is called weight) from an input signal to an output signal. Each node performs a weighted summation of different input signals, and further provides output through a specific activation function. Referring to the schematic diagram of the neuron structure shown in FIG. 2, al, a2,..., an and 1 are inputs of the neuron, w1, w2,..., wn and b represent weights, Sum represents a summation function, f represents an activation function, and t is an output result.

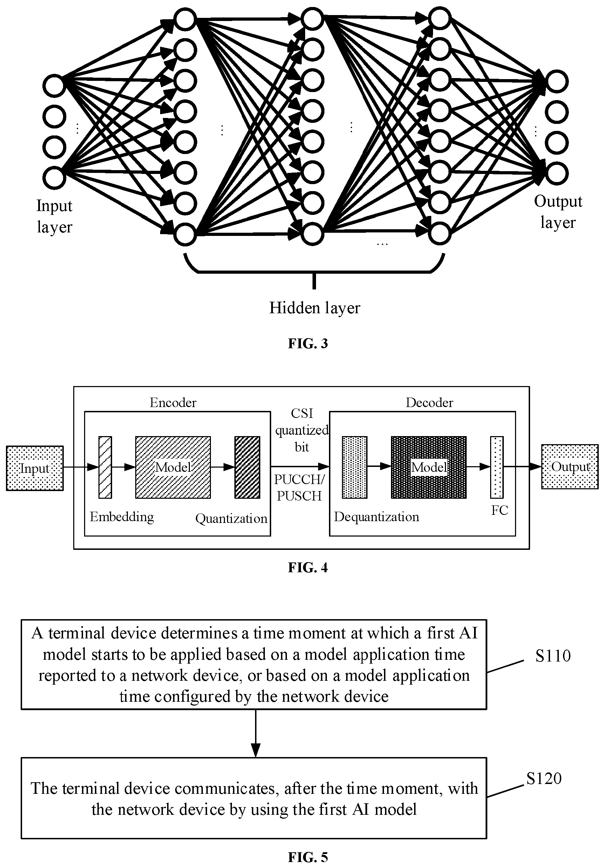

A simple neural network, as shown in FIG. 3, includes an input layer, a hidden layer and an output layer. Through different connection manners of multiple neurons, different weights and different activation functions, different outputs may be generated; further, a mapping relationship between the input and the output may be fitted. Each node in an upper level is connected to all nodes in the lower level thereof. This fully connected model can also be called DNN, that is, deep neural network.

Through processes such as dataset construction, training, verification and testing, the AI model may be trained and obtained. The training may be categorized into offline training and online training. A static training result may be obtained through the offline training for the dataset, referred to here as offline training. During the use of the AI model by the network device or the terminal device, as the further measurement and/or reporting by the terminal device, the network device may continue to collect more data and conduct real-time online training, to optimize the parameter of the AI model, thereby achieving better inference and prediction results. Once the AI model is obtained, inputting the currently obtained information into the AI model can enable the corresponding model output to be obtained through inference.

When used for wireless communications, the AI model may be categorized into a single-end model and a dual-end model. Here, the single-end model may only be deployed on either the terminal device side or the network device side, and the training of the AI model may also be performed only on one side. Additionally, the dual-end model needs to be deployed in pairs on both the terminal device side and the network device side, and the AI models needs to be trained on both sides together. This means that the models deployed on both sides are corresponding and cannot be used or updated independently.

Exemplarily, the AI model for CSI feedback is a typical dual-end model. Referring to a schematic structural diagram of the dual-end AI models for CSI feedback shown in FIG. 4, an AI model for encoding (encoder) is deployed on the terminal side, and a corresponding AI model for decoding (decoder) is deployed on the network side. The terminal device outputs CSI quantization bits (e.g., typically precoding matrix indicator (PMI) bits) based on the encoder model; and further feeds back to the network device through an uplink channel (physical uplink shared channel (PUSCH)/physical uplink control channel (PUCCH)). The network device takes the CSI quantization bits (PMI) fed back by the terminal as an input of the decoder model, thereby outputting the channel information (such as a feature vector of each subband) corresponding to the input from the terminal side, used for downlink precoding. At the same time, the terminal device also needs to monitor the model performance; and further report to the network device when the model performance is poor, so that the network device can update the model (such as updating the model structure or updating the model parameter). Since the AI models on both sides are matched, the network device needs to notify the terminal device through signaling when updating the model, so that the terminal device can also update to the corresponding AI model; otherwise, the result output by the network device is unusable.

It should be noted that the aforementioned AI model based on dual-end deployment may be used not only for CSI feedback, but also for other processing methods in which both of the terminal device side and the network device side have corresponding operations/structures. Other processing methods include, for example, channel encoding-channel decoding, modulation-demodulation, pilot generation-channel estimation, transceiving radio frequency signal processing, etc. This requires training only a set of AI models for both of the terminal device side and the network device side.

It can be understood that, for the dual-end model, if the performance of the current model on the terminal device side is poor, the network device may instruct, through signaling, the terminal device to update the model (e.g., by replacing the AI model or adjusting the model parameter). In this case, the network device also needs to update the model accordingly, to maintain mutual compatibility between the AI models on both sides. If the updates of the AI models on both sides are not completely synchronized, it can lead to incorrect output from the AI model at the receiving end, thus affecting the information transmission between the terminal device and the network device.

In addition, due to different processing capabilities of different terminal devices, the time required to deploy the AI model is also different. How to ensure that the model updates can be performed synchronously between the network device and different terminal devices is a problem that needs to be solved.

Based on this, an embodiment of the present disclosure provides a wireless communication method. Herein, when the terminal device side and the network device side adopt the corresponding dual-end AI models, if the AI model on the terminal device side is updated or reconfigured, the terminal device may determine a time moment at which the AI model configured by the network device starts to be applied based on a model application time reported to the network device, or based a model application time configured by the network device. In such way, it can be ensured that the model application times of both sides are the same, thereby guaranteeing the availability of the output of the AI models and improving the performance of the communication system.

In order to facilitate the understanding of the technical solutions in the embodiments of the present disclosure, the technical solutions of the present disclosure are described in detail below through specific embodiments. The above related technologies, as optional solution(s), may be combined with any one of the technical solutions in the embodiments of the present disclosure, and all of the combinations shall fall within the scope of protection of the embodiments of the present disclosure. The embodiments of the present disclosure include at least part of the following contents.

FIG. 5 illustrates a wireless communication method according to an embodiment of the present disclosure, and the method includes operations S110 and S120.

At block S110, a terminal device determines a time moment at which a first AI model starts to be applied based on a model application time reported to a network device, or based on a model application time configured by the network device.

At block S120, the terminal device, after the time moment, communicates with the network device by using the first AI model.

Accordingly, the network device may determine the time moment at which the first AI model starts to be applied based on the model application time reported by the terminal device, or based on the model application time configured for the terminal device. Additionally, the network device may communicate, after the time moment, with the terminal device by using a second AI model corresponding to the first AI model.

It should be noted that the terminal device and the network device may perform communication by using the corresponding dual-end AI models. Here, the first AI model is a neural network model deployed on the terminal device side, and the second AI model is a neural network model deployed on the network device side.

Exemplarily, the first AI model may be used in any of the following processes:
downlink CSI feedback;
downlink beam feedback;
channel decoding of downlink data;
demodulation of a downlink signal;
downlink channel estimation;
downlink radio frequency signal processing;
channel encoding of uplink data;
modulation of uplink data;
uplink pilot generation; or,
uplink radio frequency signal processing.

Here, the first AI model may be used for the downlink CSI feedback. The terminal device may use the obtained channel information (e.g., the feature vector, beam information, delay information, etc.) as the input of the first AI model, and further inference the corresponding CSI quantization bits through the first AI model.

The first AI model may be used for the channel decoding of downlink data. The terminal device may use the encoded data that is received as the input of the first AI model, and further output the decoded information bits.

The first AI model may be used for the demodulation of downlink signal. The terminal device may use the received downlink modulation signal as the input of the first AI model, and further output the demodulated information bits.

The first AI model may be used for the downlink channel estimation. The terminal device may use the downlink channel and pilot signal that are received as the input of the first AI model, and further output the channel estimation result.

The first AI model may be used for the downlink radio frequency signal processing. The terminal device may use the received downlink radio frequency signal as the input of the first AI model, and further output the downlink radio frequency signal processing result.

The first AI model may be used for the channel encoding of uplink data. The terminal device may use the information bits to be transmitted as the input of the first AI model, and further output the encoded data.

The first AI model may be used for the modulation of uplink data. The terminal device may use the information bits of uplink data to be transmitted as the input of the first AI model, and further output the uplink modulated signal.

The first AI model may be used for the uplink pilot generation. The terminal device may use the signal to be transmitted as the input of the first AI model, and further output the pilot signal.

The first AI model may be used for the uplink radio frequency signal processing. The terminal device may use the signal to be transmitted as the input of the first AI model, and further output the uplink radio frequency signal.

It can be understood that the first AI model may be trained through processes such as construction, training, verification and testing of the dataset.

It can be understood that the first AI model may be trained in advance through offline training and/or online training.

Exemplarily, the second AI model may be used in any of the following processes:
decoding of downlink CSI feedback information;
decoding of downlink beam feedback information;
channel decoding of uplink data;
demodulation of an uplink signal;
uplink channel estimation;
uplink radio frequency signal processing;
channel encoding of downlink data;
modulation of downlink data;
downlink pilot generation; or
downlink radio frequency signal processing.

It should be noted that the correspondence between the first AI model and the second AI model may mean that the operations implemented by the first AI model and the second AI model are in one-to-one correspondence. For example, if the first AI model is used for the downlink CSI feedback, the second AI model may be used for the decoding of downlink CSI feedback information. Alternatively, if the first AI model is used for generating the downlink beam information, the second AI model may be used for the decoding of downlink beam feedback information. If the first AI model is used for the channel encoding of uplink data, the second AI model may be used for the channel decoding of uplink data.

It can be understood that the second AI model may be trained through processes such as construction, training, verification and testing of the dataset.

It can be understood that the second AI model may be trained in advance through offline training and/or online training.

In some embodiments, the first AI model deployed on the terminal device side may be configured by the network device for the terminal device. It should be noted that, when the terminal device initially accesses to the network device, the network device may configure the first AI model for the terminal device. Alternatively, when the terminal device detects that the performance of the original AI model is poor, the network device may configure the first AI model for the terminal device to instruct the terminal device to update the model.

In some embodiments, the network device may send first information to the terminal device; correspondingly, the terminal device may receive the first information from the network device, where the first information is used for configuring the first AI model. In other words, the first information is downlink information used for configuring the first AI model.

In some embodiments, the first information may be sent to the terminal device through broadcast signaling. For example, the first information may be carried through a Physical Broadcast Channel (PBCH), a System Information Bit (SIB), a Group Common Downlink Control Information (Group Common Downlink control information (DCI)), or the like, and the embodiments of the present disclosure do not limit thereto. It should be noted that the Group Common DCI is a DCI sent to a group of terminal devices via a Common Search Space (CSS). Herein, the Group Common DCI uses a public Radio Network Temporary Identifier (RNTI) for scrambling. In some embodiments, the first information may be higher layer information, which is transmitted through higher layer signaling. Exemplarily, the first information may be transmitted through Radio Resource Control (RRC) signaling, or may be transmitted through Media Access Control (MAC) signaling, such as a MAC Control Element (MAC CE). In some embodiments, the first information may also be physical layer information, which is transmitted through physical layer signaling. Exemplarily, the first information may be carried through DCI.

In an implementation, the first information may be model recovery information sent by the network device, and the model recovery information includes configuration information for the first AI model. Upon receiving model failure reporting information sent by the terminal device, the network device may send the corresponding model recovery information for updating the terminal side model.

In some embodiments, the first information may include one or more of the following:
identification information of the first AI model;
a model functionality of the first AI model;
a model structure of a first AI model; and
a model parameter of the first AI model.

In some embodiments, the first information may carry the identification information of the first AI model. It should be understood that the terminal device may pre-configure or predefine one or more AI models. The terminal device may determine the first AI model to be applied/updated from the one or more AI models based on the identification information of the first AI model carried in the first information. Herein, for each AI model, there may be identification information corresponding to the AI model in one-to-one correspondence. The correspondence relationship may be agreed in advance between the network device and the terminal device, or may be configured by the network device to the terminal device.

In some embodiments, the model functionality of the first AI model may be indicated in the first information. Herein, the model functionality may be the functionality realized by the AI/ML model. Different models have different model functionalities, such as: PMI reporting, Rank Indicator (RI)/PMI/Channel Quality Indicator (CQI) reporting, beam information reporting, Reference Signal Received Power (RSRP) reporting, CSI compression, channel encoding and decoding, modulation and demodulation, CSI prediction, CSI prediction and compression, etc. Upon receiving the first information, the terminal device may determine the first AI model to be used based on the model functionality to be implemented by the AI model.

It should be noted that the model structure of the first AI model carried in the first information may be at least a portion of the model structures of the first AI model; in other words, the first information may carry all or part of the model structures of the first AI model. Similarly, the model parameter of the first AI model carried in the first information may be at least a portion of the model parameters of the first AI model; in other words, the first information may carry all or part of the model parameters of the first AI model. It can be understood that the network device does not necessarily configure the entire AI model, and may configure or update only a portion of the structures or a portion of the model parameters in the first AI model.

In other embodiments, the first AI model deployed on the terminal device side may be the model that is selected and used by the terminal device from the plurality of pre-configured or predefined AI models. It should be noted that, at the time of initial access, the terminal device may report the first AI model used by the terminal device to the network device. In addition, when the terminal device detects that the performance of the original AI model is poor, the terminal device may update the model (e.g., through online training), use the first AI model for communication, and simultaneously indicate the first AI model to the network device, to enable the network device to update the corresponding model currently deployed on the network device side.

Herein, the terminal device may send second information to the network device; correspondingly, the network device may receive the second information from the terminal device, where the second information is used for indicating the first AI model used by the terminal device to the network device. At this time, the second information may be sent to the network device through a physical layer channel, and typically, the second information may be reported to the network device through the PUSCH or PUCCH. If the second information is physical layer information, the second information may be reported to the network device through the PUSCH or PUCCH, for example, as part of CSI reporting. If the second information is higher layer information, the second information may be reported to the network device through the PUSCH, for example, as MAC signaling.

Upon receiving the second information, the network device may send response information corresponding to the second information, to enable the terminal device to know that the network device has correctly received the second information. For example, if the second information is carried through a Physical Random Access Channel (PRACH), the response information for the second information may be a corresponding random access response (RAR). If the second information is carried through the PUSCH, the second information may be hybrid automatic repeat request-acknowledgement (HARQ-ACK) information for the PUSCH.

In some embodiments, the second information may include one or more of the following:
identification information of the first AI model;
a model functionality of the first AI model;
a model structure of the first AI model; and
a model parameter of the first AI model.

In some embodiments, the identification information of the first AI model may be carried in the second information. It should be understood that, based on the identification information of the first AI model carried in the second information, the network device may determine the first AI model to be applied/updated by the terminal device from the one or more AI models, thereby determining the second AI model corresponding to the first AI model. Herein, for each AI model, there may be identification information corresponding to the AI model in one-to-one correspondence. The correspondence relationship may be agreed in advance between the network device and the terminal device, or may be configured by the network device to the terminal device.

In some embodiments, the model functionality of the first AI model may be indicated in the second information. Herein, the model functionality may be the functionality realized by the AI/ML model. Different models have different model functionalities, such as: PMI reporting, RI/PMI/CQI reporting, beam information reporting, RSRP reporting, CSI compression, channel encoding and decoding, modulation and demodulation, CSI prediction, CSI prediction and compression, etc. Upon receiving the second information, the network device may determine the first AI model to be used/updated by the terminal device based on the model functionality to be implemented by the AI model, thereby determining the second model corresponding to the first AI model.

It should be noted that the model structure of the first AI model carried in the second information may be at least a portion of the model structures of the first AI model; in other words, the second information may carry all or part of the model structures of the first AI model. Similarly, the model parameter of the first AI model carried in the second information may be at least a portion of the model parameters of the first AI model; in other words, the second information may carry all or part of the model parameters of the first AI model. It can be understood that the terminal device does not necessarily indicate the entire first AI model, and may configure or update only a portion of the structures or a portion of the model parameters in the first AI model.

It can be understood that, after the terminal device receives the first information used for configuring the first AI model or the terminal device sends the second information used for indicating the first AI model to the network device, both the terminal device and the network device need to determine the time moment at which the first AI model starts to be applied. This can ensure that the first AI model starts to be applied to communicate with the network device at the time moment, the application time of the corresponding models on both the terminal device side and the network device side can be guaranteed to be synchronized, and the problem of mismatch between the models on both sides can be avoided.

In one possible implementation, the terminal device may determine, based on the model application time reported to the network device, the time moment at which the first AI model that is configured by the network device/indicated by the terminal device starts to be applied. Accordingly, the network device may determine, based on the model application time reported by the terminal device, the time moment at which the first AI model that is configured by the network device for the terminal device/indicated by the terminal device starts to be applied. In another possible implementation, the terminal device may determine, based on the model application time configured by the network device, the time moment at which the first AI model that is configured by the network device/indicated by the terminal device starts to be applied. Accordingly, the network device may determine, based on the model application time configured by the network device for the terminal device, the time moment at which the first AI model that is configured by the network device/indicated by the terminal device starts to be applied.

Hereinafter, the detailed process of the terminal device determining the time moment at which the first AI model starts to be applied is described with reference to a manner #A and a manner #B.

In the manner #A, the terminal device determines, based on the model application time reported to the network device, the time moment at which the first AI model configured by the network device/indicated by the terminal device starts to be applied. Accordingly, the network device may determine, based on the model application time reported by the terminal device, the time moment at which the first AI model configured for the terminal device/indicated by the terminal device starts to be applied.

It should be noted that, before determining the time moment at which the first AI model starts to be applied, the terminal device may report its supported model application time to the network device.

Exemplarily, the terminal device may report the model application time to the network device through UE capability information (e.g., *UECapabilityInformation*)*.*

In some embodiments, before receiving the first information used for configuring the first AI model from the network device, the terminal device may report the model application time to the network device. Accordingly, before sending the first information, the network device may receive the model application time reported by the terminal device.

In some embodiments, before sending the second information used for indicating the first AI model, the terminal device may report the model application time to the network device. Accordingly, before receiving the second information, the network device may receive the model application time reported by the terminal device. Alternatively, the terminal device may carry the model application time in the second information used for indicating the first AI model, and report both the first AI model to be used and the model application time to the network device. As such, upon receiving the second information, the network device can also determine the model application time at the same time, enabling faster model application.

In some embodiments, for a scenario in which the network device configures the first AI model for the terminal device through the first information, the model application time may be any one of the following:
a time interval between a time moment at which the terminal device receives the first information and a time moment at which the first AI model is applied;
a time interval between a time moment at which the terminal device sends HARQ-ACK information for the first information and a time moment at which the first AI model is applied;
a time interval between a time moment at which the terminal device receives the first information and a time moment at which the terminal device sends feedback information that is obtained based on the first AI model; or
a time interval between a time moment at which the terminal device sends HARQ-ACK information for the first information and a time moment at which the terminal device sends feedback information that is obtained based on the first AI model.

In one possible implementation, the first AI model whose output information does not need to be reported to the network device may include, for example, the first AI model(s) used for operations such as channel decoding of downlink data, demodulation of the downlink channel, downlink channel estimation, downlink radio frequency signal processing, channel encoding of uplink data, modulation of uplink data, uplink pilot generation, and uplink radio frequency signal processing. The model application time may be the time interval between the time moment at which the terminal device receives the first information and the time moment at which the first AI model is applied, or the time interval between the time moment at which the terminal device sends HARQ-ACK information for the first information and the time moment at which the first AI model is applied.

In one possible implementation, the first AI model whose output information needs to be reported to the network device may include, for example, the first AI model(s) used for operations such as downlink CSI feedback or downlink beam information feedback. The model application time may be the time interval between the time moment at which the terminal device receives the first information and the time moment at which the terminal device sends feedback information that is obtained based on the first AI model; or the time interval between the time moment at which the terminal device sends HARQ-ACK information for the first information and the time moment at which the terminal device sends feedback information that is obtained based on the first AI model.

In some embodiments, for a scenario in which the terminal device indicates the first AI model to the network device through the second information, the model application time may be any one of the following:
a time interval between a time moment at which the terminal device sends the second information and a time moment at which the first AI model is applied;
a time interval between a time moment at which the terminal device sends the second information and a time moment at which the terminal device sends feedback information that is obtained based on the first AI model;
a time interval between a time moment at which the terminal device receives response information for the second information and a time moment at which the first AI model is applied; or
a time interval between a time moment at which the terminal device receives response information for the second information and a time moment at which the terminal device sends feedback information that is obtained based on the first AI model.

Herein, the first AI model whose output information does not need to be reported to the network device may include, for example, the first AI model(s) used for operations such as channel decoding of downlink data, demodulation of the downlink channel, downlink channel estimation, downlink radio frequency signal processing, channel coding of uplink data, modulation of uplink data, uplink pilot generation, and uplink radio frequency signal processing. The model application time may be the time interval between the time moment at which the terminal device sends the second information and the time moment at which the first AI model is applied; or, the time interval between the time moment at which the terminal device receives response information for the second information and the time moment at which the first AI model is applied.

In addition, the first AI model whose output information needs to be reported to the network device may include, for example, the first AI model(s) used for operations such as downlink CSI feedback or downlink beam information feedback. The model application time may be the time interval between the time moment at which the terminal device sends the second information and the time moment at which the terminal device sends feedback information that is obtained based on the first AI model; or the time interval between the time moment at which the terminal device receives response information for the second information and the time moment at which the terminal device sends feedback information that is obtained based on the first AI model.

It should be noted that the time moment at which the terminal device sends the feedback information that is obtained based on the first AI model related to the model application time in the above two scenarios may refer to the time moment at which the terminal device sends the feedback information that is obtained based on the first AI model for the first time.

Exemplarily, for the first AI model used for downlink CSI feedback, the model application time may be: the time interval between the time moment at which the terminal device receives the first information and the time moment at which the terminal device sends CSI feedback information that is obtained based on the first AI model (for the first time); or the time interval between the time moment at which the terminal device sends HARQ-ACK information for the first information and the time moment at which the terminal device sends CSI feedback information that is obtained based on the first AI model (for the first time). The model application time may also be: the time interval between the time moment at which the terminal device sends the second information and the time moment at which the terminal device sends the CSI feedback information that is obtained based on the first AI model (for the first time); or, the time interval between the time moment at which the terminal device receives the response information for the second information and the time moment at which the terminal device sends the CSI feedback information that is obtained based on the first AI model (for the first time).

Exemplarily, for the first AI model used for downlink beam information feedback, the model application time may be: the time interval between the time moment at which the terminal device receives the first information and the time moment at which the terminal device sends the downlink beam information that is obtained based on the first AI model (for the first time); or the time interval between the time moment at which the terminal device sends the HARQ-ACK information for the first information and the time moment at which the terminal device sends the downlink beam information that is obtained based on the first AI model (for the first time). Moreover, the model application time may also be: the time interval between the time moment at which the terminal device sends the second information and the time moment at which the terminal device sends the downlink beam information that is obtained based on the first AI model (for the first time); or the time interval between the time moment at which the terminal device receives the response information for the second information and the time moment at which the terminal device sends the downlink beam information that is obtained based on the first AI model (for the first time).

It should be noted that the time interval may be in units of slots or orthogonal frequency division multiplexing (OFDM) symbols. Furthermore, the aforementioned time interval may be in units of micro-slots, OFDM symbol sets, or in units of absolute time (e.g., N milliseconds, N seconds, N > 0), which is not limited in the embodiments of the present disclosure.

In some embodiments, the model application time reported by the terminal device to the network device may include one or more of the following:
a model application time corresponding to each of one or more AI models supported by the terminal device, where the one or more AI models supported by the terminal device include the first AI model;
a model application time corresponding to each of one or more model update modes supported by the terminal device, where the one or more model update modes supported by the terminal device include an update mode of the first AI model;
a model application time corresponding to each of one or more AI model functionalities supported by the terminal device, where the one or more model functionalities supported by the terminal device include a functionality of the first AI model; and
a model application time corresponding to each of one or more model types supported by the terminal device, where the one or more model types supported by the terminal device include a type of the first AI model.

In one possible implementation, the terminal device may support one or more AI models, which may be pre-configured or predefined. It can be understood that different AI models have different model structures and model parameters, and thus, the model application times for different AI models may also be different. For each of the one or more AI models supported by the terminal device, the terminal device may report the respective model application time corresponding to the AI model. It can be understood that the terminal device may report different model application times for different models.

In one possible implementation, the terminal device may support one or more model update modes. Exemplarily, the model update mode may include an updating model parameter and/or an updating model structure.

Herein, for each of the one or more AI model update modes supported by the terminal device, the terminal device may report the respective model application time corresponding to the AI model update mode. It can be understood that the terminal device may report different model application times for different model update modes. Exemplarily, the application time required for updating only the model parameter may be t1, the application time required for updating both the model structure and the model parameter may be t2, and t1 < t2.

It should be noted that updating both the model structure and model parameter at the same time can be regarded as updating the entire AI model.

In one possible implementation, the terminal device may support one or more model types. Exemplarily, the one or more model types supported by the terminal device may include a high-precision model and a low-precision model; or, a known model and an unknown model.

Herein, the complexity of the high-precision model is higher than that of the low-precision model, so that the model application time of the high-precision model is longer. Here, compared with the low-precision model, the high-precision model may be the model with the larger number of output bits, the model with the larger number of neural network layers, or the model with the more complex neural network structure.

Furthermore, the known model may be the model that has been deployed on the terminal device, and the unknown model may be the model that has not been deployed on the terminal device. Herein, the application time required by the known model is shorter than the application time required by the unknown model.

It should be noted that the model application time reported by the terminal device may be determined based on the processing capability or hardware configuration of the terminal device, and the time required for inference of different AI models/different AI model types. Exemplarily, the model application time for the terminal device using a CPU for the AI model may be longer than a model application time for the terminal device using a GPU for the AI model.

It can be understood that the terminal device and the network device may determine, based on the reported model application time, the time moment at which the first AI model (the first AI model may be configured by the network device through the first information or may be indicated by the terminal device through the second information) starts to be applied, which may be realized by one or more of the following.

The time moment at which the first AI model starts to be applied may be determined based on the first AI model configured by the network device/indicated by the terminal device and the model application time corresponding to each of one or more AI models reported by the terminal device.

The time moment at which the first AI model starts to be applied may be determined based on the functionality of the first AI model configured by the network device/indicated by the terminal device and the model application time corresponding to each of one or more model functionalities reported by the terminal device.

The time moment at which the first AI model starts to be applied may be determined based on the model update mode of the first AI model configured by the network device/indicated by the terminal device and the model application time corresponding to each of one or more model update modes reported by the terminal device.

The time moment at which the first AI model starts to be applied may be determined based on the model type of the first AI model configured by the network device/indicated by the terminal device and the model application time corresponding to each of one or more model types reported by the terminal device.

Exemplarily, the terminal device may report the model application time corresponding to a AI model 1 as T1, and the model application time corresponding to a AI model 2 as T2. If the network device configures the model 1 for the terminal device through the first information, the terminal device and the network device may determine, based on the model application time T1 corresponding to the AI model 1, the time moment at which the AI model 1 configured through the first information starts to be applied. Alternatively, if the terminal device indicates the model 2 through the second information, the terminal device and the network device may determine, based on the model application time T2 corresponding to the AI model 2, the time moment at which the AI model 2 indicated through the second information starts to be applied.

Exemplarily, the terminal device may report the model application time corresponding to a model functionality 1 (e.g., the CSI compression functionality) as T3, and the model application time corresponding to a model functionality 2 (e.g., the channel encoding and decoding functionality) as T4. If the network device configures the model functionality 1 for the terminal device through the first information, the terminal device and the network device may determine, based on the model application time T3 corresponding to the model functionality 1, the time moment at which the AI model configured through the first information starts to be applied. Alternatively, if the terminal device indicates the model functionality 2 through the second information, the terminal device and the network device may determine, based on the model application time T4 corresponding to the model functionality 2, the time moment at which the AI model indicated through the second information starts to be applied.

Exemplarily, the terminal device may report the model application time T5 corresponding to the high-precision model and the model application time T6 corresponding to the low-precision model. If the AI model configured by the network device for the terminal device through the first information is the low-precision model, the terminal device and the network device may determine, based on the model application time T6 of the low-precision model, the time moment at which the AI model configured through the first information starts to be applied. If the terminal device indicates through the second information that the type of the AI model is the high-precision model, the terminal device and the network device may determine, based on the model application time T5 of the high-precision model, the time moment at which the AI model indicated through the second information starts to be applied.

Exemplarily, the terminal device may report the model application time T7 corresponding to the known model, and the model application time T8 corresponding to the unknown model. If the AI model 1 configured by the network device for the terminal device through the first information is an unknown model (e.g., the AI model 1 is a model other than a preconfigured or predefined candidate model for the terminal device), the terminal device and the network device may determine, based on the model application time T8 of the unknown model, the time moment at which the AI model 1 configured through the first information starts to be applied.

It should be noted that, when two or more of the following are different: the model application time corresponding to the first AI model, the model application time corresponding to the model functionality of the first AI model, the model application time corresponding to the model type of the first AI model, and the model application time corresponding to the model update mode of the first AI model reported by the terminal device, the terminal device may determine, based on the longest (or shortest) model application time, the time moment at which the first AI model starts to be applied.

In the manner #B, the terminal device determines, based on the model application time configured by the network device, the time moment at which the first AI model configured by the network device/indicated by the terminal device starts to be applied. Accordingly, the network device may determine, based on the model application time configured by the network device for the terminal device, the time moment at which the first AI model configured by the network device/indicated by the terminal device starts to be applied.

It should be noted that the relevant explanation of the model application time can refer to the description in the aforementioned embodiments, and for the sake of brevity, the description will not be repeated here.

In some embodiments, the network device may directly configure the model application time for the terminal device. Herein, the network device may send third information to the terminal device; and correspondingly, the terminal device may receive the third information from the network device, where the third information is used for configuring the model application time. That is, the network device configures the model application time for the terminal device through the third information.

In some embodiments, the third information may be sent to the terminal device through broadcast signaling. For example, the third information may be carried through a PBCH, a SIB, a Group Common DCI, or the like, and the embodiments of the present disclosure do not limit thereto. In some embodiments, the third information may be higher layer information, which is transmitted through higher layer signaling. Exemplarily, the third information may be transmitted through RRC signaling or MAC CE signaling. In some embodiments, the third information may also be physical layer information, which is transmitted through physical layer signaling. Exemplarily, the third information may be carried through DCI signaling.

For a scenario in which the network device configures the first AI model for the terminal device through the first information, the third information may include the model application time of the first AI model configured in the first information.

It should be noted that the third information may be indicated to the terminal device together with the first information, to enable the terminal device to simultaneously determine the model application time upon receiving the configuration information of the model, which can result in faster model application.

In one possible implementation, the network device may configure the model application time of the first AI model for the terminal device based on a preset rule or a preset mapping relationship.

Exemplarily, the network device may configure the application time of the first AI model for the terminal device according to factors such as the type of the first AI model configured for the terminal device, the update mode of the first AI model, and the like.

Exemplarily, the network device may pre-store the model application time corresponding to each AI model (a mapping relationship between the AI model and the model application time). When the network device configures the first AI model for the terminal device, the terminal device may configure, based on the mapping relationship, the model application time corresponding to the first AI model.

In another possible implementation, the network device may receive the model application time reported by the terminal device, and configure the actual model application time for the terminal device based on the model application time reported by the terminal device.

It should be noted that the network device may determine the model application time configured for the terminal device based on the model application times reported by a plurality of terminal devices within the coverage range.

In some embodiments, the network device may adopt the maximum value among the model application times reported by the plurality of terminal devices as the model application time actually used by each terminal device within the coverage range, and further configure the model application time for these terminal devices. That is, the duration of the model application time configured by the network device for the terminal device is greater than or equal to the duration of the model application time reported by the terminal device.

Thus, the network device can configure the model application time for the plurality of different terminal devices within its coverage range at the same time, so that the network device and different terminal devices can synchronously update the models, thereby ensuring that the model output at the receiving end remains available and improving the communication performance.

For a scenario in which the terminal device indicates the first AI model through the second information, in a possible implementation, after receiving the second information, the network device may determine the model application time of the first AI model indicated through the second information, and further indicate the model application time to the terminal device through the third information. That is, after receiving the second information, the network device may send the third information to the terminal device to configure, for the terminal device, the model application time of the first AI model indicated in the second information.

It should be noted that the network device may configure the model application time of the first AI model for the terminal device based on a preset rule or a preset mapping relationship. Alternatively, the network device may configure the actual model application time for the terminal device based on the model application time reported by the terminal device. For example, the network device may adopt the maximum value among the model application times reported by the plurality of terminal devices as the model application time actually used by each terminal device within the coverage range, and further configure the model application time for these terminal devices.

For a scenario in which the terminal device indicates the first AI model through the second information, in another possible implementation, the network device may further send the third information to the terminal device before the second information. In this implementation, the third information may include one or more of the following:
a model application time corresponding to each of one or more AI models, where the one or more AI models include the first AI model;
a model application time corresponding to each of one or more model functionalities, where the one or more model functionalities include the functionality of the first AI model;
a model application time corresponding to each of one or more model update modes, where the one or more model update modes include an update mode of the first AI model;
a model application time corresponding to each of one or more model types, where the one or more model types include a type of the first AI model.

It can be understood that, after receiving the third information, the terminal device may determine the actual model application time of the first AI model indicated through the second information, and this determination may be made by combining the first AI model indicated through the second information with the model application time corresponding to each AI model, each model functionality, each model update mode or each model type configured through the third information.

It should be noted that the model application time configured in the third information may be determined by the network device based on the model application time reported by the terminal device. It can be understood that the network device may determine the model application time configured for the terminal device based on the model application times reported by the plurality of terminal devices within the coverage range. In some embodiments, the network device may adopt the maximum value among the model application times reported by the plurality of terminal devices as the model application time actually used by each terminal device within the coverage range, and further configure the model application time for these terminal devices.

Exemplarily, the third information may configure the model application time corresponding to each of the AI model 1 (or the model functionality 1/model update mode 1/model type 1) and the AI model 2 (or the model functionality 2/model update mode 2/model type 2). Herein, the model application time of the AI model 1 (or the model functionality 1/model update mode 1/model type 1) configured in the third information may be the maximum value from the model application times corresponding to the AI model 1 (or the model functionality 1/model update mode 1/model type 1) reported by the plurality of terminal devices; and the model application time of the AI model 2 (or the model functionality 2/model update mode 2/model type 2) configured in the third information may be the maximum value from the model application times corresponding to the AI model 2 (or the model functionality 2/model update mode 2/model type 2) reported by the plurality of terminal devices.

As such, the network device can configure the model application time for the plurality of different terminal devices within its coverage range at the same time, so that the network device and different terminal devices can synchronously update the models, thereby ensuring that the model output at the receiving end remains available and improving the communication performance.

In the embodiments of the present disclosure, after the terminal device determines the time moment at which the first AI model starts to be applied based on the above-described manners, the terminal device may further use the first AI model for information transmission with the network device after the time moment. Accordingly, the network device may use the second model corresponding to the first AI model for information transmission with the terminal device after the time moment.

In some embodiments, before applying the first AI model, the terminal device may perform information transmission with the network device based on a third AI model; or, the terminal device may not perform information transmission with the network device based on the AI mode. Accordingly, before the terminal device applies the first AI model, the network device may perform information transmission with the terminal device based on a fourth AI model corresponding to the third AI model; or, the network device may not perform information transmission with the terminal device based on the AI model. For example, the network device may receive information from the terminal device based on a conventional non-AI method.

It should be noted that the third AI model may be a predefined AI model or a historical AI model. Here, the predefined AI model is an AI model agreed in advance between the terminal device and the network device. The historical AI model may be an AI model configured by the network device for the terminal device or an AI model indicated by the terminal device before the time moment at which the first AI model starts to be applied. The historical AI model may be: an AI model having a model structure and a model parameter completely different from those of the first AI model, an AI model having the same model structure but different model parameter, or an AI model having different model functionalities, which is not limited in the embodiments of the present disclosure. In addition, the fourth AI model may be an AI model corresponding to the third AI model deployed on the network device side.

Exemplarily, if the first AI model configured by the network device through the first information/the first AI model indicated by the terminal device through the second information is a new model (i.e., the model ID of the first AI model is different from the model ID of the third AI model), the terminal device may use the previously-used third AI model for information transmission with the network device before the time moment at which the first AI model starts to be applied.

Exemplarily, if the network device configures a new model functionality through the first information/the terminal device indicates a new model functionality through the second information (i.e., the functionality of the first AI model is different from the functionality of the third AI model), the terminal device may use the third model corresponding to the previous functionality for information transmission with the network device before the time moment at which the first AI model starts to be applied. The functionality herein may also be a functionality ID.

Exemplarily, if the network device updates both the model structure and the model parameter through the first information/the terminal device updates both the model structure and the model parameter through the second information, the terminal device may use the previously-used model structure and model parameter to perform information transmission with the network device before the time moment at which the first AI model determined by the terminal device starts to be applied.

Exemplarily, if the network device updates only the model parameter through the first information/the terminal device updates only the model parameter through the second information, the terminal device may use the previously-used model parameter to perform information transmission with the network device before the time moment at which the first AI model determined by the terminal device starts to be applied.

It should also be noted that the terminal device may not perform the information transmission with the network device based on the AI model. That is, the terminal device uses the conventional non-AI method for the information transmission with the network device.

As described above, in the embodiments of the present disclosure, when the terminal device side and the network device side adopt the corresponding dual-end AI models, if the AI model of the terminal device side is updated or reconfigured, the terminal device may determine the time moment at which the AI model configured by the network device starts to be applied based on the model application time reported to the network device or the model application time configured by the network device. In such way, it can be ensured that the application times of the models on both sides are synchronized, thereby ensuring that the output of the AI model remains available and improving the performance of the communication system.

For a scenario in which the network device configures the first AI model for the terminal device through the first information, the time moment at which the first AI model starts to be applied, as determined by the terminal device and the network device, may be related to the first information. Hereinafter, in a scenario in which the network device configures the first AI model for the terminal device through the first information, the time moment at which the first AI model starts to be applied will be described with reference to the following manners #1 to #3.

In the manner #1, the time moment at which the first AI model starts to be applied may be:
a first slot or a first OFDM symbol that follows k OFDM symbols starting from a last OFDM symbol of an uplink channel carrying HARQ-ACK information for the first information; or,
a first slot or a first OFDM symbol that follows k OFDM symbols starting from a last OFDM symbol of a downlink channel carrying the first information, where k is the model application time.

It should be noted that the time interval represented by the model application time in the manner #1 may be in units of OFDM symbols. The model application time may be k OFDM symbols, or the time interval represented by the model application time may be k OFDM symbols. Herein, k is an integer greater than or equal to 1.

It can be understood that, as described above, k may be reported by the terminal device to the network device, or may be configured by the network device.

In one possible implementation, the terminal device may use the first slot or the first OFDM symbol that follows k OFDM symbols starting from the last OFDM symbol of the downlink channel carrying the first information as the time moment at which the first AI model starts to be applied. In other words, the terminal device may set the first slot or the first OFDM symbol at an interval of k OFDM symbols following the last OFDM symbol of the downlink channel carrying the first information as the time moment at which the first AI model starts to be applied.

It should be noted that the downlink channel herein may be a PBCH, a physical downlink shared channel (PDSCH), a physical downlink control channel (PDCCH), or the like. Exemplarily, when the first information may be broadcast information, the downlink channel may be the PBCH; when the first information is higher layer information, the downlink channel may be the PDSCH; and when the first information is physical layer information, the downlink channel may be the PDCCH.

It should be further noted that the k OFDM symbols in the embodiments of the present disclosure may be k-1 or k+1 OFDM symbols, which is not limited in the embodiments of the present disclosure.

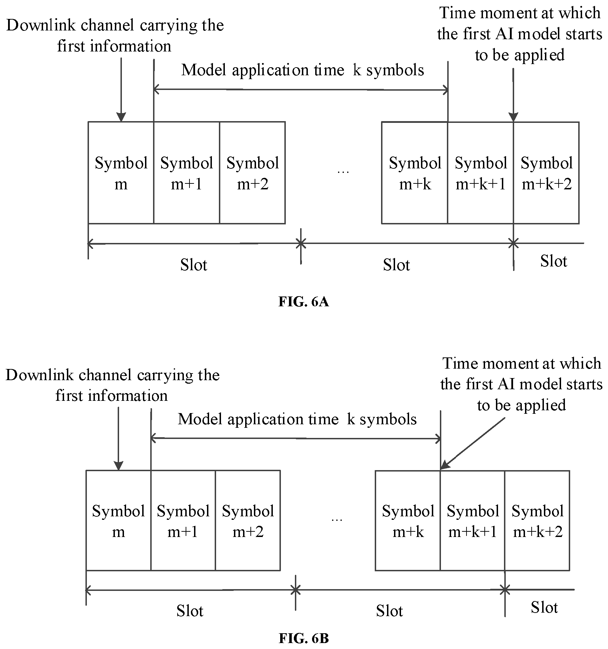

Exemplarily, referring to FIG. 6A, assuming that the last OFDM symbol of the downlink channel carrying the first information is the symbol m, the terminal device may determine the time moment at which the first AI model starts to be applied to be the first slot following the symbol in which the symbol m+k is located.

Exemplarily, referring to FIG. 6B, assuming that the last OFDM symbol of the downlink channel carrying the first information is the symbol m, the terminal device may determine the time moment at which the first AI model starts to be applied to be the first OFDM symbol following the symbol in which the symbol m+k is located, that is, the symbol m+k+1 shown in FIG. 6B.

In another possible implementation, the terminal device may use the first slot or the first OFDM symbol that follows k OFDM symbols starting from the last OFDM symbol of the uplink channel carrying HARQ-ACK information for the first information as the time moment at which the first AI model starts to be applied. In other words, the terminal device may set the first slot or the first OFDM symbol at an interval of k OFDM symbols following the last OFDM symbol of the uplink channel carrying the HARQ-ACK information for the first information as the time moment at which the first AI model starts to be applied.

It can be understood that, after receiving the first information, the terminal device may send the HARQ-ACK information for the first information to the network device. For example, when the first information is higher layer information or physical layer information, after receiving the first information, the terminal device may feedback the HARQ-ACK information for the first information to the network device.

It should be noted that the uplink channel carrying the HARQ-ACK information for the first information may be the PUCCH.

It should be further noted that the k OFDM symbols in the embodiments of the present disclosure may be k-1 or k+1 OFDM symbols, which is not limited in the embodiments of the present disclosure.

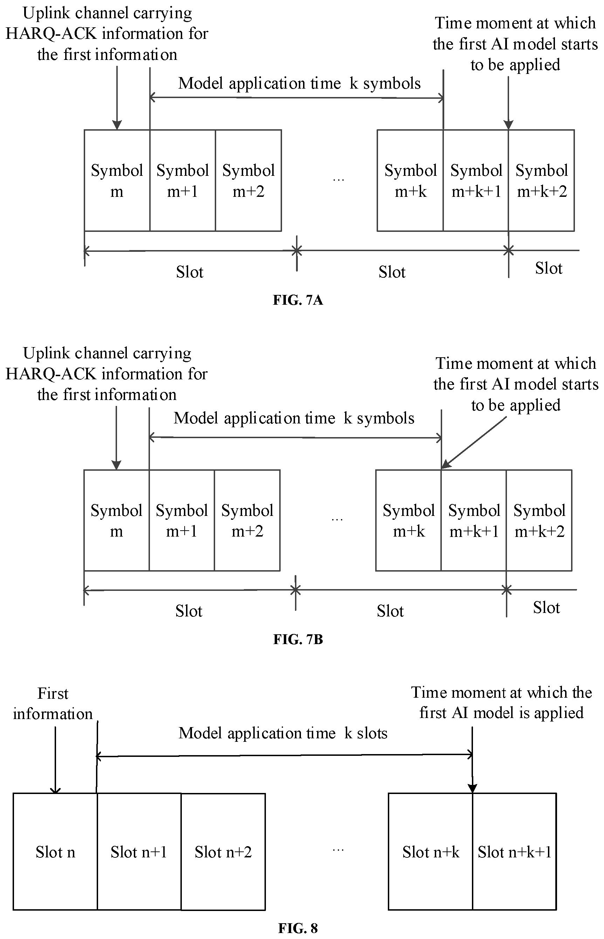

Exemplarily, referring to FIG. 7A, assuming that the last OFDM symbol of the uplink channel carrying the HARQ-ACK information for the first information is the symbol m, the terminal device may determine the time moment at which the first AI model starts to be applied to be the first slot following the symbol in which the symbol m+k is located.

Exemplarily, referring to FIG. 7B, assuming that the last OFDM symbol of the uplink channel carrying the HARQ-ACK information for the first information is the symbol m, the terminal device may determine the time moment at which the first AI model starts to be applied to be the first OFDM symbol following the symbol in which the symbol m+k is located, that is, the symbol m+k+1 shown in FIG. 7B.

It can be understood that using the first OFDM symbol following k OFDM symbols as the time moment at which the first AI model starts to be applied can shorten the time application interval of the first AI model; and at the same time, the accuracy of the model application time can be improved as compared with using the first slot following k OFDM symbols as the time moment at which the first AI model starts to be applied.

In the manner #2, the time moment at which the first AI model starts to be applied may be:
a first slot that follows k slots starting from a slot in which the terminal device receives the first information, where k is the model application time.

It should be noted that the time interval represented by the model application time in the manner #2 may be in units of slots. The model application time may be k slots, or the time interval represented by the model application time may be k slots. Herein, k is an integer greater than or equal to 1.

It can be understood that, as described above, k may be reported by the terminal device to the network device, or may be configured by the network device.

In this manner #2, the terminal device may use the first slot that follows k slots starting from the slot in which the terminal device receives the first information as the time moment at which the first AI model starts to be applied. In other words, the terminal device may set the first slot at an interval of k slots following the slot in which the first information is received as the time moment at which the first AI model starts to be applied.

It should be noted that the k slots in the embodiments of the present disclosure may be k-1 or k+1 slots, which is not limited in the embodiments of the present disclosure.

Exemplarily, referring to FIG. 8, assuming that the terminal device receives the first information in the slot n, the terminal device may determine the time moment at which the first AI model starts to be applied to be the first slot following the slot n+k, that is, the slot n+k+1.

In the manner #3, the time moment at which the first AI model starts to be applied may be:
a first slot that follows k slots or (k+3N) slots or max (k, 3N) slots starting from a slot in which an uplink channel carrying HARQ-ACK information for the first information is located, where k is the model application time, and N is the number of slots included in 1 milliseconds (ms).

It should be noted that the time interval represented by the model application time in the manner #3 may be in units of slots. The model application time may be k slots, or the time interval represented by the model application time may be k slots. Herein, k is an integer greater than or equal to 1.

It can be understood that, as described above, k may be reported by the terminal device to the network device, or may be configured by the network device.

In one implementation, the terminal device may use the first slot that follows k slots starting from the slot in which the uplink channel carrying HARQ-ACK information for the first information is located as the time moment at which the first AI model starts to be applied. In other words, the terminal device may set the first slot at an interval of k slots following the slot in which the uplink channel carrying HARQ-ACK information for the first information is located as the time moment at which the first AI model starts to be applied.

It should be noted that, in this implementation, the first information is higher layer information, and typically, the first information is transmitted through RRC signaling.

It should also be noted that the k slots in the embodiments of the present disclosure may be k-1 or k+1 slots, which is not limited in the embodiments of the present disclosure.

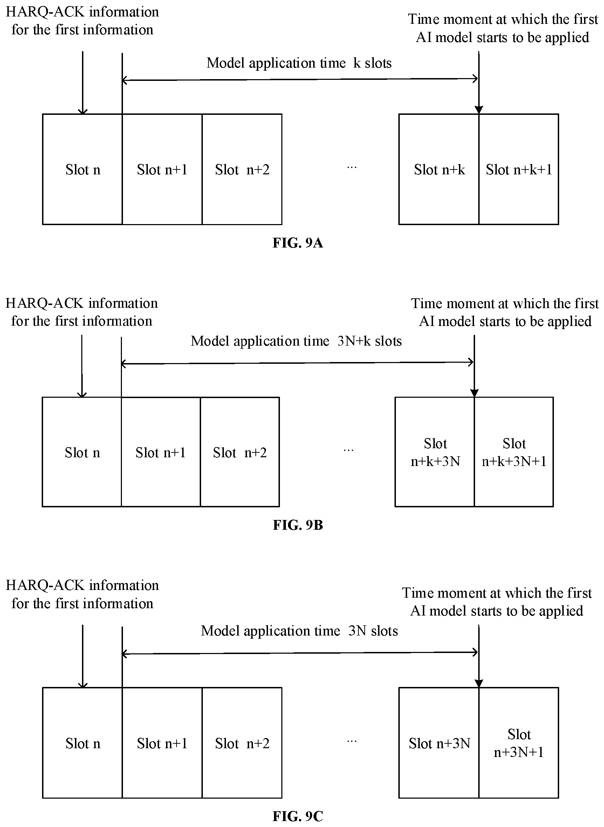

Exemplarily, referring to FIG. 9A, assuming that the terminal device sends the HARQ-ACK information for the PDSCH carrying the first information in the slot n, the time moment at which the first AI model starts to be applied may be the first slot following the slot n+k, that is, the slot n+k+1.

In one implementation, the terminal device may use the first slot that follows (k+3N) slots starting from the slot in which the uplink channel carrying HARQ-ACK information for the first information is located as the time moment at which the first AI model starts to be applied. In other words, the terminal device may set the first slot at an interval of (k+3N) slots following the slot in which the uplink channel carrying HARQ-ACK information for the first information is located as the time moment at which the first AI model starts to be applied.

It should be noted that, in this implementation, the first information is higher layer information, and typically, the first information is transmitted through MAC layer signaling, such as the signaling defined in 3GPP TS38.321.

It can be understood that 3N slots (i.e., 3 ms) are the minimum time required for the MAC layer signaling to become effective; and by taking the interval of k+3N slots, it can ensure that the MAC layer signaling has sufficient time to become effective.

It should also be noted that the k slots in the embodiments of the present disclosure may be k-1 or k+1 slots, which is not limited in the embodiments of the present disclosure.

Exemplarily, referring to FIG. 9B, assuming that the terminal device sends the HARQ-ACK information for the PDSCH carrying the first information in the slot n, the time moment at which the first AI model starts to be applied may be the first slot following the slot n+k+3N, that is, the slot n+k+3N+1.

In one implementation, the terminal device may use the first slot that follows max (k, 3N) slots starting from the slot in which the uplink channel carrying HARQ-ACK information for the first information is located as the time moment at which the first AI model starts to be applied. In other words, the terminal device may set the first slot at an interval of max (k, 3N) slots following the slot in which the uplink channel carrying HARQ-ACK information for the first information is located as the time moment at which the first AI model starts to be applied.

It should be noted that, in this implementation, the first information is higher layer information, and typically, the first information is transmitted through MAC layer signaling, such as the signaling defined in 3GPP TS38.321.

It can be understood that 3N slots (i.e., 3ms) are the minimum time required for the MAC layer signaling to become effective; and by taking the larger value of k and 3N, it can ensure that the MAC layer signaling has sufficient time to become effective.

It should also be noted that the k slots in the embodiments of the present disclosure may be k-1 or k+1 slots, which is not limited in the embodiments of the present disclosure.

Exemplarily, referring to FIG. 9C, assuming that the terminal device sends the HARQ-ACK information for the PDSCH carrying the first information in the slot n and k < 3N, the time moment at which the first AI model starts to be applied may be the first slot following the slot n+3N, that is, the slot n+3N+1.

It should be noted that, for determining the time moment at which the first AI model starts to be applied, the terminal device and the network device may agree upon one of the manners #1 to #3; or the network device may specify one of the manners #1 to #3 for the terminal device. As such, it can ensure that the corresponding time moments at which the first AI model starts to be applied on both sides are the same.

In addition, for a scenario in which the terminal device indicates the first AI model to the network device through the second information, the time moment at which the first AI model starts to be applied, determined by the terminal device and the network device, may be related to the second information. Hereinafter, in a scenario in which the terminal device indicates the first AI model to the network device through the second information, the time moment at which the first AI model starts to be applied will be described with reference to the following manners #1' to #3'.

In the manner #1', the time moment at which the first AI model starts to be applied may be:
a first slot or a first OFDM symbol that follows k OFDM symbols starting from a last OFDM symbol of an uplink channel carrying the second information; or
a first slot or a first OFDM symbol that follows k OFDM symbols starting from a last OFDM symbol of response information for an uplink channel carrying the second information, where k is the model application time.

It should be noted that the time interval represented by the model application time in the manner #1' may be in units of OFDM symbols. The model application time may be k OFDM symbols, or the time interval represented by the model application time may be k OFDM symbols. Herein, k is an integer greater than or equal to 1.

In one possible implementation, the terminal device may use the first slot or the first OFDM symbol that follows k OFDM symbols starting from the last OFDM symbol of the uplink channel carrying the second information as the time moment at which the first AI model starts to be applied. In other words, the terminal device may set the first slot or the first OFDM symbol at an interval of k OFDM symbols following the last OFDM symbol of the uplink channel carrying the second information as the time moment at which the first AI model starts to be applied.

It should be noted that the uplink channel herein may be the PUSCH or PUCCH. Exemplarily, when the second information is higher layer information, the uplink channel may be the PUSCH. If the second information is physical layer information, the uplink channel may be the PUCCH.

It should be further noted that the k OFDM symbols in the embodiments of the present disclosure may be k-1 or k+1 OFDM symbols, which is not limited in the embodiments of the present disclosure.

In another possible implementation, the terminal device may use the first slot or the first OFDM symbol that follows k OFDM symbols starting from the last OFDM symbol of the downlink channel carrying response information for the second information as the time moment at which the first AI model starts to be applied. In other words, the terminal device may set the first slot or the first OFDM symbol at an interval of k OFDM symbols following the last OFDM symbol of the downlink channel carrying the response information for the second information as the time moment at which the first AI model starts to be applied.

It can be understood that, upon receiving the second information, the network device may send response information corresponding to the second information, to enable the terminal device to know that the network device has correctly received the second information. For example, if the second information is carried through the PRACH, the response information for the second information may be the corresponding RAR. If the second information is carried through the PUSCH, the second information may be HARQ-ACK information for the PUSCH.

It should be noted that the k OFDM symbols described above may be k-1 or k+1 OFDM symbols, which is not limited in the embodiments of the present disclosure.

In the manner #2', the time moment at which the first AI model starts to be applied may be:
a first slot that follows k slots starting from a slot in which the terminal device sends the second information, where the second information is uplink information used for indicating the first AI model, and k is the model application time.

It should be noted that the time interval represented by the model application time in the manner #2' may be in units of slots. The model application time may be k slots, or the time interval represented by the model application time may be k slots. Herein, k is an integer greater than or equal to 1.

It should be understood that, as described above, k may be reported by the terminal device to the network device, or may be configured by the network device.

In this manner #2', the terminal device may use the first slot that follows k slots starting from the slot in which the terminal device sends the second information as the time moment at which the first AI model starts to be applied. In other words, the terminal device may set the first slot at an interval of k slots following the slot in which the second information is sent as the time moment at which the first AI model starts to be applied.

It should be noted that the k slots in the embodiments of the present disclosure may be k-1 or k+1 slots, which is not limited in the embodiments of the present disclosure.

In the manner #3', the time moment at which the first AI model starts to be applied may be:
a first slot that follows k slots or (k+3N) slots or max (k, 3N) slots starting from a slot in which a downlink channel carrying response information for the second information is located, where the second information is uplink information used for indicating the first AI model, k is the model application time, and N is the number of slots included in 1 ms.

It should be noted that the time interval represented by the model application time in the manner #3' may be in units of slots. The model application time may be k slots, or the time interval represented by the model application time may be k slots. Herein, k is an integer greater than or equal to 1.

It can be understood that, as described above, k may be reported by the terminal device to the network device, or may be configured by the network device.

In one implementation, the terminal device may use the first slot that follows k slots starting from the slot in which the downlink channel carrying response information for the second information is located as the time moment at which the first AI model starts to be applied. In other words, the terminal device may set the first slot at an interval of k slots following the slot in which the downlink channel carrying the response information for the second information is located as the time moment at which the first AI model starts to be applied.

It should be noted that, in this implementation, the second information is higher layer information, and typically, the second information is transmitted through RRC signaling.

It should also be noted that the k slots in the embodiments of the present disclosure may be k-1 or k+1 slots, which is not limited in the embodiments of the present disclosure.

In one implementation, the terminal device may use the first slot that follows (k+3N) slots starting from the slot in which the downlink channel carrying the response information for the second information is located as the time moment at which the first AI model starts to be applied. In other words, the terminal device may set the first slot at an interval of (k+3N) slots following the slot in which the downlink channel carrying the response information for the second information is located as the time moment at which the first AI model starts to be applied.

It should be noted that, in this implementation, the second information is higher layer information, and typically, the second information is transmitted through MAC layer signaling, such as the signaling defined in 3GPP TS38.321.

It can be understood that 3N slots (i.e., 3ms) are the minimum time required for the MAC layer signaling to become effective; and by taking the interval k+3N slots, it can ensure that the MAC layer signaling has sufficient time to become effective.

It should also be noted that the k slots in the embodiments of the present disclosure may be k-1 or k+1 slots, which is not limited in the embodiments of the present disclosure.

In one implementation, the terminal device may use the first slot that follows max (k, 3N) slots starting from the slot in which the downlink channel carrying the response information for the second information is located as the time moment at which the first AI model starts to be applied. In other words, the terminal device may set the first slot at an interval of max (k, 3N) slots following the slot in which the downlink channel carrying the response information for the second information is located as the time moment at which the first AI model starts to be applied.

It should be noted that, in this implementation, the second information is higher layer information, and typically, the second information is transmitted through MAC layer signaling, such as the signaling defined in 3GPP TS38.321.

It can be understood that 3N slots (i.e. 3ms) are the minimum time required for MAC layer signaling become effective; and by taking the larger value of k and 3N, it can ensure that the MAC layer signaling has sufficient time to become effective.

It should also be noted that the k slots in the embodiments of the present disclosure may be k-1 or k+1 slots, which is not limited in the embodiments of the present disclosure.

It should be noted that, for determining the time moment at which the first AI model starts to be applied, the terminal device and the network device may agree upon one of the manners #1' to #3'; or the network device may specify one of the manners #1' to #3' for the terminal device. As such, it can ensure that the corresponding time moments at which the first AI model starts to be applied on both sides are the same.

In some embodiments, the time moment at which the first AI model starts to be applied and/or the model application time may be determined based on any one of the following:
a subcarrier spacing of a downlink channel carrying the first information;
a subcarrier spacing of an uplink channel carrying HARQ-ACK information for the first information;
a subcarrier spacing of an uplink channel carrying the second information;
a subcarrier spacing of a downlink channel carrying response information for the second information; or
a subcarrier spacing of a bandwidth part (BWP) that is activated on a carrier to which the first AI model is applied.

It should be noted that the time moment at which the first AI model starts to be applied and the model application time are the parameters in units of slots or OFDM symbols. The actual corresponding time duration/time moment (or absolute time duration/slot) needs to be determined based on the subcarrier spacing, and the corresponding time duration is different for different subcarrier spacing.

Exemplarily, reference is made to the relationship among the subcarrier spacing, the number of slots and the duration of slots shown in Table 1.

**Table 1**

| Subcarrier spacing (kHz) | Number of slots per subframe | Duration of each slot (ms) |
|---|---|---|
| 15 | 1 | 1 |
| 30 | 2 | 0.5 |
| 60 | 4 | 0.25 |
| 120 | 8 | 0.125 |
| 240 | 16 | 0.0625 |

As shown in Table 1, the subcarrier spacing of 30 kHz corresponds to the duration of the slot of 0.5 ms; and if the model application time is k slots, the duration of k slots is 0.5k ms. Similarly, the subcarrier spacing of 60 kHz corresponds to the duration of slot of 0.25 ms; and if the model application time is k slots, the duration of k slots is 0.25k ms.

It can be understood that the time moment at which the first AI model starts to be applied and/or the model application time may be determined based on the subcarrier spacing associated with the first AI model.

In some embodiments, for a scenario in which the network device configures the first AI model for the terminal device through the first information, the time moment at which the first AI model starts to be applied and/or the model application time may be determined based on any one of the following:
the subcarrier spacing of the downlink channel carrying the first information;
the subcarrier spacing of the uplink channel carrying HARQ-ACK information for the first information; or
the subcarrier spacing of the BWP that is activated on the carrier to which the first AI model is applied.

In one possible implementation, the time moment at which the first AI model starts to be applied and/or the model application time may be determined based on the subcarrier spacing of the downlink channel carrying the first information.

Exemplarily, if the first information is carried through the PBCH, the time moment at which the first AI model starts to be applied and/or the model application time may be determined based on the subcarrier spacing of the PBCH. If the first information is carried through the Group Common DCI, the time moment at which the first AI model starts to be applied and/or the model application time may be determined based on the subcarrier spacing of the PDCCH carrying the DCI.

Exemplarily, with reference to the schematic diagram of the slot structure shown in FIG. 8, the time moment at which the model starts to be applied is the slot n+k+1; the terminal device may obtain, based on the subcarrier spacing carrying the first information, the duration of the time interval between the slot n+k+1 and the slot n, thereby determining the model application time.

In another possible implementation, the time moment at which the first AI model starts to be applied and/or the model application time may be determined based on the subcarrier spacing of the uplink channel carrying the HARQ-ACK information for the first information.

Exemplarily, if the first information is carried through higher layer signaling, the time moment at which the first AI model starts to be applied and/or the model application time may be determined based on the subcarrier spacing of the uplink channel in which the HARQ-ACK information for the PDSCH carrying the higher layer signaling is located.

Exemplarily, with reference to the schematic diagram of the slot structure shown in FIG. 9B, if the time moment at which the model starts to be applied is the slot n+k+3N+1, the terminal device may obtain, based on the determined subcarrier spacing, the duration of the time interval between the slot n+k+3N+1 and the slot n, thereby determining the model application time.

In yet another possible implementation, the time moment at which the first AI model starts to be applied and/or the model application time may be based on the subcarrier spacing of the activated BWP on the carrier to which the first AI model is applied.

In some embodiments, when the number of carriers to which the first AI model is applied is multiple, the time moment at which the first AI model starts to be applied and/or the model application time may be determined based on the first subcarrier spacing. Herein, the first subcarrier spacing is any subcarrier spacing of BWPs activated on the plurality of carriers to which the first AI model is applied. The first subcarrier spacing may be agreed between the network device and the terminal device.

Exemplarily, the first subcarrier spacing may be the smallest subcarrier spacing among the BWPs activated respectively on the plurality of carriers to which the first AI model is applied. For example, the carriers to which the first AI model is applied are CC1, CC2 and CC3, respectively, where the activated BWPs on the three CCs are BWP1, BWP2 and BWP3, respectively; and the subcarrier spacing configured for the BWP1 < the subcarrier spacing configured for the BWP2 < the subcarrier spacing configured for the BWP3. In this case, the time moment at which the first AI model starts to be applied and/or the model application time may be determined based on the subcarrier spacing configured for the BWP1.

In other embodiments, for a scenario in which the terminal device indicates the first AI model to the network device through the second information, the time moment at which the first AI model starts to be applied and/or the model application time may be determined based on any one of the following:
the subcarrier spacing of the uplink channel carrying the second information;
the subcarrier spacing of the downlink channel carrying response information for the second information; or
the subcarrier spacing of the BWP that is activated on the carrier to which the first AI model is applied.

In one possible implementation, the time moment at which the first AI model starts to be applied and/or the model application time may be determined based on the subcarrier spacing of the uplink channel carrying the second information.

Exemplarily, if the second information is carried through the UCI, the time moment at which the first AI model starts to be applied and/or the model application time may be determined based on the subcarrier spacing of the PUCCH of the UCI. If the second information is carried through higher layer signaling, the time moment at which the first AI model starts to be applied and/or the model application time may be determined based on the subcarrier spacing of the PUSCH carrying the higher layer signaling. If the second information is carried through the PRACH, the time moment at which the first AI model starts to be applied and/or the model application time may be determined based on the subcarrier spacing of the PRACH.

In another possible implementation, the time moment at which the first AI model starts to be applied and/or the model application time may be determined based on the subcarrier spacing of the downlink channel carrying the response information for the second information.

Exemplarily, if the second information is carried through higher layer signaling, the time moment at which the first AI model starts to be applied and/or the model application time may be determined based on the subcarrier spacing of the downlink channel in which the HARQ-ACK information for the PUSCH carrying the higher layer signaling is located. If the second information is carried through the PRACH, the time moment at which the first AI model starts to be applied and/or the model application time may be determined based on the subcarrier spacing of the downlink channel in which the corresponding RAR is located.

In yet another possible implementation, the time moment at which the first AI model starts to be applied and/or the model application time may be based on the subcarrier spacing of the activated BWP on the carrier to which the first AI model is applied.

In some embodiments, when the number of carriers to which the first AI model is applied is multiple, the time moment at which the first AI model starts to be applied and/or the model application time may be determined based on the first subcarrier spacing. Herein, the first subcarrier spacing is any subcarrier spacing of BWPs activated on the plurality of carriers to which the first AI model is applied. The first subcarrier spacing may be agreed between the network device and the terminal device.

Exemplarily, the first subcarrier spacing may be the smallest subcarrier spacing among the BWPs activated respectively on the plurality of carriers to which the first AI model is applied. For example, the carriers to which the first AI model is applied are CC1, CC2 and CC3, respectively, where the activated BWPs on the three CCs are BWP1, BWP2 and BWP3, respectively; and the subcarrier spacing configured for the BWP1 < the subcarrier spacing configured for the BWP2 < the subcarrier spacing configured for the BWP3. In this case, the time moment at which the first AI model starts to be applied and/or the model application time may be determined based on the subcarrier spacing configured for the BWP1.

It can be seen that, by agreeing on the same subcarrier spacing between the terminal device and the network device to determine the time moment at which the first AI model starts to be applied and/or the model application time, it is possible to ensure that the model application time as well as the time moment at which the first AI model starts to be applied determined by the terminal device and the network are the same, thereby achieving the effect of synchronously updating the models. Conversely, when the subcarrier spacing of the channel carrying the first information/the second information is different from the subcarrier spacing used by the carrier to which the first AI model is applied, if it is not agreed which subcarrier spacing is used to determine the time moment at which the first AI model starts to be applied and/or the model application time, the terminal device and the network device cannot determine the actual time duration, which may result in differing time duration determinations between the both sides.

Hereinafter, the method provided by the embodiments of the present disclosure will be described in detail with reference to specific application scenarios.

### Embodiment 1:

In the embodiment 1, the network device may configure the AI model for the terminal device(s) within its coverage range through broadcast signaling (i.e., the first information is carried through broadcast signaling). This embodiment may include the following operations S1 to S6.

S1, the terminal device reports the supported model application time through UE capability information.

It should be noted that the model application time is the time interval required between the terminal device to receive the broadcast signaling for configuring the AI model and to apply the AI model. Here, the time interval is in units of slots.

In some embodiments, the model application time reported by the terminal device may include:
a model application time corresponding to each of one or more AI models supported by the terminal device;
a model application time corresponding to each of one or more model update modes supported by the terminal device;
a model application time corresponding to each of one or more model types supported by the terminal device.
S2, the network device indicates the model application time to the terminal device based on the UE capability reported by the terminal device.

It should be noted that the network device needs to consider the model application times reported by a plurality of terminal devices within its coverage range to determine the indicated model application time. Exemplarily, the network device may adopt the maximum value among the model application times reported by the plurality of terminal devices as the model application time adopted by each terminal within the coverage range, and further indicate the maximum value to these terminal devices.

In some embodiments, the model application time may be indicated through broadcast signaling. Exemplarily, the broadcast signaling may be the PBCH, the SIB, or the Group Common DCI. Here, the broadcast signaling indicating the model application time and the broadcast signaling indicating the AI model may be the same signaling or different signaling, which is not limited in the embodiments of the present disclosure.

In some embodiments, the model application time may also be indicated through higher layer signaling or physical layer signaling. Exemplarily, the higher layer signaling may be MAC layer signaling used for model failure recovery response indication, or MAC layer signaling used for the model update.

S3, the terminal device receives the broadcast signaling from the network device for configuring the AI model.

In some embodiments, the terminal device may receive, through broadcast signaling, at least one of a model ID, a functionality, a model structure, and a model parameter of the AI model configured by the network device.

It can be understood that the network device does not necessarily configure the entire AI model, and may configure or update only a portion of the structures or a portion of the model parameters in the AI model.

In some embodiments, if the network device configures a model ID of a new model through the broadcast signaling, the time moment at which the AI model starts to be applied may be the time moment at which the updated model starts to be applied. Before the time moment, the terminal device may use the previously-used model for information transmission with the network device.

In some embodiments, if the network device configures a functionality of a new model through the broadcast signaling, the time moment at which the AI model starts to be applied may be the time moment at which the updated model starts to be applied. Before the time moment, the terminal device may use the model corresponding to the previous functionality for information transmission with the network device. The functionality here may also be a functionality ID.

In some embodiments, if the network device updates both the model structure and the model parameter through the broadcast signaling, the time moment at which the AI model starts to be applied may be the time moment at which the updated model structure and model parameter start to be applied. Before the time moment, the terminal device may use the previously-used model structure and model parameter to perform information transmission with the network device.

In some embodiments, if the network device updates only the model parameter through the broadcast signaling, the time moment at which the AI model starts to be applied may be the time moment at which the updated model parameter starts to be applied. Before the time moment, the terminal device may use the previously-used model parameter for information transmission with the network device.

It should be noted that each terminal device that receives the broadcast signaling for configuring the AI model may apply the AI model configured through the broadcast signaling. For example, the network device may indicate, through the Group Common DCI, the AI model to be used to a group of terminal devices, and the Group Common DCI is transmitted through a common search space CSS, scrambled with a common RNTI.

In some embodiments, while the network device configures the AI model through the broadcast signaling, the corresponding model application time may also be indicated through the same signaling.

It can be understood that the network device may deploy the same AI model to a group of terminal devices, and indicate the same model application time; and the group of terminal devices may simultaneously apply the AI model. In such way, only one AI model needs to be deployed as the corresponding encoder/decoder model on the network side, and there is no need to deploy a corresponding model for each terminal device. Thereby, the implementation complexity of the network device can be significantly reduced, and the cost of downlink signaling overhead can be also reduced.

S4, the terminal device determines, based on the model application time configured by the network device, the time moment at which the AI model starts to be applied.

Herein, the time moment at which the AI model starts to be applied may be: the first slot that follows k slots starting from the slot in which the terminal device receives the broadcast signaling for configuring the AI model, where k is the model application time (in units of slots) indicated by the network device.

Exemplarily, referring to FIG. 8, assuming that the terminal device receives the broadcast signaling for configuring the AI model in the slot n, the time moment at which the AI model starts to be applied is the first slot following the slot n+k, that is, the AI model starts to be applied in the slot n+k+1.

It should be noted that, in the present embodiment, the time moment at which the AI model starts to be applied and/or the model application time may be the parameters in units of slots. The corresponding time duration/time moment needs to be determined based on the subcarrier spacing, and the corresponding time duration is different for different subcarrier spacing.

In the embodiments of the present disclosure, the time moment at which the AI model configured by the network device starts to be applied and/or the model application time may be determined based on the subcarrier spacing of the channel carrying the broadcast signaling.

It can be understood that, by agreeing on the same subcarrier spacing between the terminal device and the network device to determine the time moment at which the AI model starts to be applied and the model application time, it is possible to ensure that the model application time as well as the time moment at which the first AI model starts to be applied determined by the terminal device and the network device are the same, thereby achieving the effect of synchronously updating the models. Conversely, when the subcarrier spacing of the channel carrying the broadcast signaling for configuring the AI model is different from the subcarrier spacing used by the carrier to which the AI model is applied, if it is not agreed which subcarrier spacing is used to determine the time moment at which the first AI model starts to be applied and/or the model application time, the terminal device and the network device cannot determine the duration of k slots.

S5, after the time moment at which the first AI model starts to be applied, the terminal device performs information transmission with the network device by using the AI model configured through the broadcast signaling.

In some embodiments, before applying the AI model, the terminal device may adopt a predefined AI model for information transmission with the network device; or, the terminal device may not perform information transmission with the network device based on the AI model. Herein, the predefined AI model is the AI model agreed in advance between the terminal device and the network device. When the terminal device does not transmit information to the network device based on the AI model, the terminal device uses a conventional non-AI method for information transmission with the network device.

In some embodiments, after the time moment at which the AI model configured through the broadcast signaling starts to be applied, the terminal device may use the AI model for any of the following processes:
downlink CSI feedback;
channel decoding of downlink data;
demodulation of a downlink signal;
downlink channel estimation;
downlink radio frequency signal processing;
channel encoding of uplink data;
modulation of uplink data;
uplink pilot generation; or,
uplink radio frequency signal processing.

S6, after the time moment at which the AI model starts to be applied, the network device performs information transmission with the terminal device by using the network-side model corresponding to the AI model configured through the aforementioned broadcast signaling.

In some embodiments, after the time moment at which the AI model configured through the broadcast signaling starts to be applied, the network device may use the network-side model corresponding to the configured AI model for any of the following processes:
decoding of downlink CSI feedback information;
channel decoding of uplink data;
demodulation of an uplink signal;
uplink channel estimation;
uplink radio frequency signal processing;
channel encoding of downlink data;
modulation of downlink data;
downlink pilot generation; or
downlink radio frequency signal processing.

It should be noted that the module(s) in which the network device applies the model and the module(s) in which the terminal side applies the AI model may be in one-to-one correspondence, such as, channel encoding-channel decoding, modulation-demodulation, pilot generation-channel estimation, radio frequency signal processing at transmitting end-radio frequency signal processing at receiving end, and the like.

### Embodiment 2:

In the embodiment 2, the network device may configure the AI model for the terminal device through higher layer signaling (i.e., the first information is carried through higher layer signaling). This embodiment may include the following operations S1 to S5.

S1, the terminal device reports the supported model application time through the UE capability.

It should be noted that the model application time is the time interval required between the terminal device to feed back the HARQ-ACK information for the higher layer signaling used for configuring the AI model and to apply the AI model. Here, the time interval is in units of slots or OFDM symbols.

In some embodiments, the above higher layer signaling may be RRC signaling or MAC layer signaling (MAC CE).

In some embodiments, the HARQ-ACK information for the above higher layer signaling is HARQ-ACK information for the PDSCH carrying the first information.

S2, the terminal device receives, through higher layer signaling, the AI model configured by the network device.

S3, the terminal device determines, based on the model application time reported in S1, a time moment at which the AI model configured by the network device starts to be applied.

In one implementation, the time moment at which the AI model configured through the higher layer signaling starts to be applied may be the first slot that follows k slots starting from the slot in which the HARQ-ACK information for the PDSCH carrying the higher layer signaling is located.

Here, k is the model application time, which may be determined by the terminal device based on the supported model application time reported through the UE capability.

It should be noted that the typical higher layer signaling in this implementation is RRC signaling.

In one implementation, the time moment at which the AI model configured through the higher layer signaling starts to be applied may be the first slot that follows (k+3N) slots starting from the slot in which the HARQ-ACK information for the PDSCH carrying the higher layer signaling is located.

Here, k is the model application time, and N is the number of slots included in 1 ms, that is, 3N slots are 3 ms.

It should be noted that the typical higher layer signaling may be the MAC layer signaling. 3N slots (i.e., 3 ms) are the minimum time required for the MAC layer signaling to become effective; and by taking the interval of k+3N slots, it can ensure that the MAC layer signaling has sufficient time to become effective.

In one implementation, the time moment at which the AI model configured through the higher layer signaling starts to be applied may be the first slot that follows p slots starting from the slot in which the HARQ-ACK information for the PDSCH carrying the higher layer signaling is located.

Here, p is the larger value of k and 3N, k is the model application time (in units of slots), and N is the number of slots included in 1ms, that is, 3N slots are 3 ms.

It should be noted that the typical higher layer signaling may be the MAC layer signaling. 3N slots (i.e., 3 ms) are the minimum time required for the MAC layer signaling to become effective; and by taking the larger value of k and 3N, it can ensure that the MAC layer signaling has sufficient time to become effective.

It should also be noted that, in the present embodiment, the time moment at which the AI model starts to be applied and/or the model application time may be the parameters in units of slots. The corresponding time duration/time moment needs to be determined based on the subcarrier spacing, and the corresponding time duration is different for different subcarrier spacing.

In one implementation, the time moment at which the AI model configured by the network device starts to be applied and/or the model application time may be determined based on the subcarrier spacing of the uplink channel in which the HARQ-ACK information for the PDSCH carrying the higher layer signaling is located.

In another implementation, the time moment at which the AI model configured by the network device starts to be applied and/or the model application time may be determined based on the subcarrier spacing of the activated BWP on the carrier of the AI model.

If the AI model is applied to a plurality of carriers, each with an active BWP, the time moment at which the AI model starts to be applied and/or the model application time may be determined based on the smallest subcarrier spacing among the active BWPs on the plurality of carriers. In such way, even in the multi-carrier scenario, the network device and the terminal device can determine the unique time moment the AI model starts to be applied.

It can be understood that, by agreeing on the same subcarrier spacing between the terminal device and the network device to determine the time moment at which the AI model starts to be applied and the model application time, it is possible to ensure that the model application time as well as the time moment at which the model starts to be applied determined by the terminal device and the network device are the same, thereby achieving the effect of synchronously updating the models. Conversely, when the subcarrier spacing of the channel carrying the broadcast signaling for configuring the AI model is different from the subcarrier spacing used by the carrier to which the AI model is applied, if it is not agreed which subcarrier spacing is used to determine the time moment at which the AI model starts to be applied and/or the model application time, the terminal device and the network device cannot determine the duration of k slots.

S4, after the time moment at which the first AI model starts to be applied, the terminal device performs information transmission with the network device by using the AI model configured through the higher layer signaling.

S5, after the time moment at which the first AI model starts to be applied, the network device performs information transmission with the terminal device by using the network-side model corresponding to the AI model configured through the higher layer signaling.

### Embodiment 3

In the embodiment 1, the network device may configure the AI model for the terminal device through DCI (i.e., the first information is carried through DCI). This embodiment may include the following operations S1 to S5.

S1, the terminal device reports the supported model application time through the UE capability.

It should be noted that the model application time is the time interval required between the terminal device to feed back the HARQ-ACK information for the DCI signaling used for configuring the AI model and to apply the AI model. The time interval is in units of slots or OFDM symbols.

S2, the terminal device receives, through the DCI signaling, the AI model configured by the network device.

It should be noted that the network device may configure the AI model for the terminal device through the DCI signaling transmitted in the UE-dedicated search space. For example, the DCI signaling may be the DCI sent by the network device for a model failure recovery response, or the DCI used for scheduling the PDSCH or PUSCH. Herein, the transmission of the PDSCH or PUSCH may be based on an AI model (not necessarily the configured AI model).

S3, the terminal device determines, based on the model application time reported in S1, a time moment at which the AI model configured by the network device starts to be applied.

In one embodiment, the time moment at which the AI model configured through the DCI signaling starts to be applied may be the first slot that follows at least k OFDM symbols starting from the last OFDM symbol of the uplink channel carrying the HARQ-ACK information for the DCI. Here, k is the model application time (in units of OFDM symbols).

Exemplarily, referring to FIG. 6A, assuming that the last OFDM symbol of the uplink channel carrying the HARQ-ACK information for the DCI signaling is the symbol m, the time moment at which the AI model starts to be applied is the first slot following the slot in which the symbol m+k is located.

In another implementation, the time moment at which the AI model configured through the DCI signaling starts to be applied may be the first OFDM symbol that follows at least k OFDM symbols starting from the last OFDM symbol of the uplink channel carrying the HARQ-ACK information for the DCI. Here, k is the model application time (in units of OFDM symbols).

Exemplarily, referring to FIG. 6N, assuming that the last OFDM symbol of the uplink channel carrying the HARQ-ACK information for the DCI is symbol m, the time moment at which the AI model starts to be applied is the first symbol following the symbol m+k, that is, the symbol m+k+1.

It should also be noted that, in the present embodiment, the time moment at which the AI model starts to be applied and/or the model application time may be the parameters in units of slots/OFDMs. The corresponding time duration/time moment needs to be determined based on the subcarrier spacing, and the corresponding time duration is different for different subcarrier spacing.

Herein, the time moment at which the AI model configured by the network device starts to be applied and/or the model application time may be determined based on the subcarrier spacing of the activated BWP on the carrier of the AI model.

If the AI model is applied to a plurality of carriers, each with an active BWP, the time moment at which the AI model starts to be applied and/or the model application time may be determined based on the smallest subcarrier spacing among the active BWPs on the plurality of carriers. In such way, even in the multi-carrier scenario, the network device and the terminal device can determine the unique time moment the AI model starts to be applied.

S4, after the time moment at which the first AI model starts to be applied, the terminal device performs information transmission with the network device by using the AI model configured through the DCI signaling.

S5, after the time moment at which the first AI model starts to be applied, the network device performs information transmission with the terminal device by using the network-side model corresponding to the AI model configured through the DCI signaling.

To sum up, when the terminal device side and the network device side adopt the corresponding dual-end AI models, if the model on the terminal device side is updated or reconfigured, the wireless communication method provided by the embodiments of the present disclosure can ensure that the model application time moments of both sides are the same, and the network device and different terminals can synchronously update the models, thereby ensuring that the model output at the opposite end is available.

The preferred implementations of the present disclosure are described in detail above with reference to the accompanying drawings. However, the present disclosure is not limited to the specific details in the aforementioned implementations. Within the scope of the technical conception of the present disclosure, a variety of simple modifications may be made to the technical solutions of the present disclosure, and such simple modifications shall fall within the scope of protection of the present disclosure. For example, various specific technical features described in the above specific implementations may be combined in any appropriate way without contradiction. In order to avoid unnecessary repetition, the present disclosure does not further elaborate on various possible combinations. For another example, any combination may be made between various implementations of the present disclosure, as long as the combinations do not contradict the idea of the present disclosure, and the combinations shall also be regarded as the contents of the present disclosure. For yet another example, under the premise of no conflict, various embodiments and/or technical features in the various embodiments described in the present disclosure may be combined with the related art in any manner. The technical solutions acquired after such combinations shall also fall within the scope of protection of the present disclosure.

It should be further understood that, in the various method embodiments of the present disclosure, the size of sequence number of the aforementioned processes does not imply the order of execution. The order of execution of each of the processes should be determined based on functions and inherent logic thereof, and shall not constitute any limitation on the implementation processes in the embodiments of the present disclosure. Furthermore, in the embodiments of the present disclosure, terms "downlink", "uplink" and "sidelink" are used to indicate a transmission direction of a signal or data. Herein, the term "downlink" is used to indicate that the transmission direction of the signal or data is a first direction transmitted from a station to a user device in a cell. The term "uplink" is used to indicate that the transmission direction of the signal or data is a second direction transmitted from the user device in the cell to the station. Moreover, the term "sidelink" is used to indicate that the transmission direction of the signal or data is a third direction transmitted from a user device 1 to a user device 2. For example, a "downlink signal" indicates that the transmission direction of the signal is the first direction. Furthermore, in the embodiments of the present disclosure, a term "and/or" is only used to indicate an association relationship for describing associated objects, and indicates that three kinds of relationships may exist. Specifically, "A and/or B" may indicate three cases, i.e., independent existence of A, existence of both A and B, and independent existence of B. Moreover, a character "/" in the present disclosure generally indicates that preceding and following associated objects form an "or" relationship.

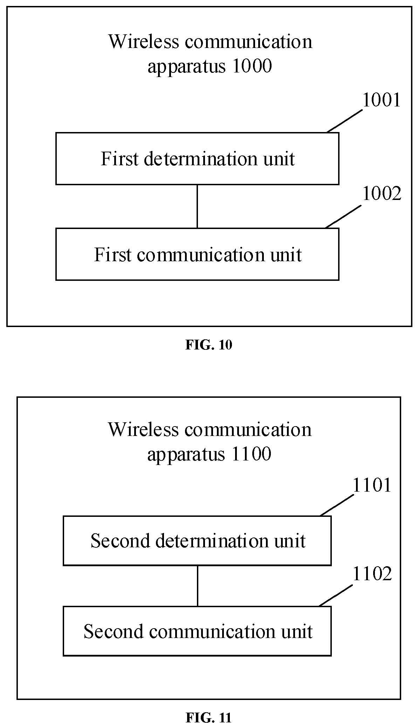

FIG. 10 is a schematic structural diagram of a wireless communication apparatus 1000 according to an embodiment of the present disclosure, which is applied to a terminal device. As shown in FIG. 10, the wireless communication apparatus 1000 includes a first determination unit 1001 and a first communication unit 1002.

The first determination unit 1001 is configured to determine a time moment at which a first AI model starts to be applied based on a model application time reported to a network device, or based on a model application time configured by the network device.

The first communication unit 1002 is configured to communicate, after the time moment, with the network device by using the first AI model.

In some embodiments, the model application time may be any one of the following:
a time interval between a time moment at which the terminal device receives the first information and a time moment at which the first AI model is applied;
a time interval between a time moment at which the terminal device sends HARQ-ACK information for the first information and a time moment at which the first AI model is applied;
a time interval between a time moment at which the terminal device receives the first information and a time moment at which the terminal device sends feedback information that is obtained based on the first AI model; or
a time interval between a time moment at which the terminal device sends HARQ-ACK information for the first information and a time moment at which the terminal device sends feedback information that is obtained based on the first AI model.

Herein, the first information may be downlink information used for configuring the first AI model, and the time interval may be in units of slots or OFDM symbols.

In some embodiments, the time moment at which the first AI model starts to be applied may be any one of the following:
a first slot or a first OFDM symbol that follows k OFDM symbols starting from a last OFDM symbol of an uplink channel carrying HARQ-ACK information for first information;
a first slot or a first OFDM symbol that follows k OFDM symbols starting from a last OFDM symbol of a downlink channel carrying first information;
a first slot that follows k slots starting from a slot in which the terminal device receives first information; or
a first slot that follows k slots or (k+3N) slots or max (k, 3N) slots starting from a slot in which an uplink channel carrying HARQ-ACK information for first information is located;

Herein, the first information may be downlink information used for configuring the first AI model, k may be the model application time, and N may be the number of slots included in 1 ms.

In some embodiments, the wireless communication apparatus 1000 further may include a receiving unit, and the receiving unit is configured to receive the first information. The first information may be downlink information used for configuring the first AI model. Herein, the first information may include one or more of the following:
identification information of the first AI model;
a model functionality of the first AI model;
a model structure of the first AI model; and
a model parameter of the first AI model.
In some embodiments, the model application time may be any one of the following:
a time interval between a time moment at which the terminal device sends second information and a time moment at which the first AI model is applied;
a time interval between a time moment at which the terminal device sends second information and a time moment at which the terminal device sends feedback information that is obtained based on the first AI model;
a time interval between a time moment at which the terminal device receives response information for second information and a time moment at which the first AI model is applied; or
a time interval between a time moment at which the terminal device receives response information for second information and a time moment at which the terminal device sends feedback information that is obtained based on the first AI model.

Herein, the second information may be uplink information used for indicating the first AI model, and the time interval may be in units of slots or OFDM symbols.

In some embodiments, the time moment at which the first AI model starts to be applied may be any one of the following:
a first slot or a first OFDM symbol that follows k OFDM symbols starting from a last OFDM symbol of an uplink channel carrying second information;
a first slot or a first OFDM symbol that follows k OFDM symbols starting from a last OFDM symbol of response information for an uplink channel carrying second information;
a first slot that follows k slots starting from a slot in which the terminal device sends second information; or
a first slot that follows k slots or (k+3N) slots or max (k, 3N) slots starting from a slot in which a downlink channel carrying response information for second information is located.

Herein, the second information may be uplink information used for indicating the first AI model, k may be the model application time, and N may be the number of slots included in 1 ms.

In some embodiments, the wireless communication apparatus 1000 may further include a sending unit, and the sending unit is configured to send second information. The second information may be uplink information used for indicating the first AI model.

Herein, the second information includes one or more of the following:
identification information of the first AI model;
a model functionality of the first AI model;
a model structure of the first AI model; and
a model parameter of the first AI model.

In some embodiments, the model application time reported to the network device may include one or more of the following:
a model application time corresponding to each of one or more AI models supported by the terminal device, where the one or more AI models supported by the terminal device include the first AI model;
a model application time corresponding to each of one or more model functionalities supported by the terminal device, where the one or more model functionalities supported by the terminal device include a functionality of the first AI model;
a model application time corresponding to each of one or more model update modes supported by the terminal device, where the one or more model update modes supported by the terminal device include an update mode of the first AI model; and
a model application time corresponding to each of one or more model types supported by the terminal device, wherein the one or more model types supported by the terminal device include a type of the first AI model.

In some embodiments, the one or more model update modes may include an updating model parameter and/or an updating model structure.

In some embodiments, the one or more model types may include:
a high-precision model and a low-precision model; or, a known model and an unknown model.

In some embodiments, the time moment at which the first AI model starts to be applied and/or the model application time may be determined based on any one of the following:
a subcarrier spacing of a downlink channel carrying first information;
a subcarrier spacing of an uplink channel carrying second information;
a subcarrier spacing of an uplink channel carrying HARQ-ACK information for first information;
a subcarrier spacing of a downlink channel carrying response information for second information; or
a subcarrier spacing of a BWP that is activated on a carrier to which the first AI model is applied.

Herein, the first information may be downlink information used for configuring the first AI model, and the second information may be uplink information used for indicating the first AI model.

In some embodiments, there may be a plurality of carriers to which the first AI model is applied.

The time moment at which the first AI model starts to be applied and/or the model application time may be determined based on a first subcarrier spacing, and the first subcarrier spacing may be a minimum subcarrier spacing among BWPs that are respectively activated on the plurality of carriers to which the first AI model is applied.

In some embodiments, before applying the first AI model, the terminal device may perform information transmission with the network device based on the third AI model; or, the terminal device may not perform information transmission with the network device based on the AI model.

Herein, the third AI model may be a predefined AI model or a historical AI model.

FIG. 11 is a schematic structural diagram of a wireless communication apparatus 1100 according to an embodiment of the present disclosure, which is applied to a network device. As shown in FIG. 11, the wireless communication apparatus 1100 includes a second determination unit 1101 and a second communication unit 1102.

The second determination unit 1101 is configured to determine a time moment at which a first artificial intelligence (AI) model starts to be applied based on a model application time reported by a terminal device, or based on a model application time configured for the terminal device.

The second communication unit 1102 is configured to communicate, after the time moment, with the terminal device by using a second AI model corresponding to the first AI model.

In some embodiments, the model application time may be any one of the following:
a time interval between a time moment at which the terminal device receives first information and a time moment at which the first AI model is applied;
a time interval between a time moment at which the terminal device sends HARQ-ACK information for first information and a time moment at which the first AI model is applied;
a time interval between a time moment at which the terminal device receives first information and a time moment at which the terminal device sends feedback information that is obtained based on the first AI model; or
a time interval between a time moment at which the terminal device sends HARQ-ACK information for first information and a time moment at which the terminal device sends feedback information that is obtained based on the first AI model.

Herein, the first information may be downlink information used for configuring the first AI model, and the time interval may be in units of slots or OFDM symbols.

In some embodiments, the time moment at which the first AI model starts to be applied may be any one of the following:
a first slot or a first OFDM symbol that follows k OFDM symbols starting from a last OFDM symbol of an uplink channel carrying HARQ-ACK information for first information;
a first slot or a first OFDM symbol that follows k OFDM symbols starting from a last OFDM symbol of a downlink channel carrying first information;
a first slot that follows k slots starting from a slot in which the terminal device receives first information; or
a first slot that follows k slots or (k+3N) slots or max (k, 3N) slots starting from a slot in which an uplink channel carrying HARQ-ACK information for first information is located.

Herein, the first information may be downlink information used for configuring the first AI model, k may be the model application time, and N may be the number of slots included in 1 ms.

In some embodiments, the wireless communication apparatus 1100 may further include a sending unit, and the sending unit may be configured to send the first information to the terminal device. The first information may be a downlink used for configuring the first AI model. Herein, the first information may include one or more of the following:
identification information of the first AI model;
a functionality of the first AI model;
a model structure of the first AI model; and
a model parameter of the first AI model.

In some embodiments, the model application time may be any one of the following:
a time interval between a time moment at which the terminal device sends second information and a time moment at which the first AI model is applied;
a time interval between a time moment at which the terminal device sends second information and a time moment at which the terminal device sends feedback information that is obtained based on the first AI model;
a time interval between a time moment at which the terminal device receives response information for second information and a time moment at which the first AI model is applied; or
a time interval between a time moment at which the terminal device receives response information for second information and a time moment at which the terminal device sends feedback information that is obtained based on the first AI model.

Herein, the second information may be uplink information used for indicating the first AI model, and the time interval may be in units of slots or OFDM symbols.

In some embodiments, the time moment at which the first AI model starts to be applied may be any one of the following:
a first slot or a first OFDM symbol that follows k OFDM symbols starting from a last OFDM symbol of an uplink channel carrying second information;
a first slot or a first OFDM symbol that follows k OFDM symbols starting from a last OFDM symbol of response information for an uplink channel carrying second information;
a first slot that follows k slots starting from a slot in which the terminal device sends second information; or
a first slot that follows k slots or (k+3N) slots or max (k, 3N) slots starting from a slot in which a downlink channel carrying response information for second information is located.

Herein, the second information may be uplink information used for indicating the first AI model, k may be the model application time, and N may be the number of slots included in 1 ms.

In some embodiments, the wireless communication apparatus 1100 may further include a receiving unit, and the receiving unit may be configured to receive the second information from the terminal device. The second information may be uplink information used for indicating the first AI model.

Herein, the second information may include one or more of the following:
identification information of the first AI model;
a model functionality of the first AI model;
a model structure of the first AI model; and
a model parameter of the first AI model.

In some embodiments, the model application time reported by the terminal device may include one or more of the following:
a model application time corresponding to each of one or more AI models supported by the terminal device, where the one or more AI models supported by the terminal device include the first AI model;
a model application time corresponding to each of one or more model functionalities supported by the terminal device, where the one or more model functionalities supported by the terminal device include a functionality of the first AI model;
a model application time corresponding to each of one or more model update modes supported by the terminal device, wherein the one or more model update modes supported by the terminal device include an update mode of the first AI model; and
a model application time corresponding to each of one or more model types supported by the terminal device, wherein the one or more model types supported by the terminal device include a type of the first AI model.

In some embodiments, the one or more model update modes may include an updating model parameter and/or an updating model structure.

In some embodiments, the one or more model types may include:
a high-precision model and a low-precision model; or, a known model and an unknown model.

In some embodiments, the model application time configured by the network device for the terminal device may be determined based on the model application time reported by the terminal device.

In some embodiments, a duration of the model application time configured by the network device for the terminal device may be greater than or equal to a duration of the model application time reported by the terminal device.

In some embodiments, the time moment at which the first AI model starts to be applied and/or the model application time may be determined based on any one of the following:
a subcarrier spacing of a downlink channel carrying the first information;
a subcarrier spacing of an uplink channel carrying the second information;
a subcarrier spacing of an uplink channel carrying HARQ-ACK information for the first information;
a subcarrier spacing of a downlink channel carrying response information for second information; or
a subcarrier spacing of a BWP that is activated on a carrier to which the first AI model is applied.

Herein, the first information may be downlink information used for configuring the first AI model, and the second information may be uplink information used for indicating the first AI model.

In some embodiments, there may be a plurality of carriers to which the first AI model is applied.

The time moment at which the first AI model starts to be applied and/or the model application time may be determined based on a first subcarrier spacing, and the first subcarrier spacing may be a minimum subcarrier spacing among BWPs that are respectively activated on the plurality of carriers to which the first AI model is applied.

In some embodiments, before applying the first AI model, the network device may perform information transmission with the terminal device based on a fourth AI model corresponding to a third AI model; or, the network device may not perform information transmission with the terminal device based on an AI model.

Herein, the third AI model may be a predefined model or a historical AI model.

It should be understood by those skilled in the art that the related description of the above communication apparatus in the embodiments of the present disclosure may be understood with reference to the related description of the communication method in the embodiments of the present disclosure.

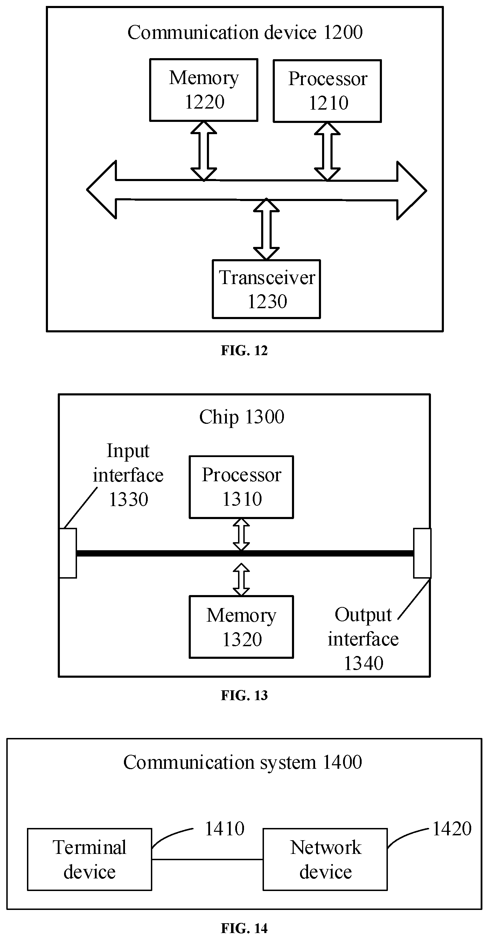

FIG. 12 is a schematic structural diagram of a communication device 1200 according to an embodiment of the present disclosure. The communication device may be a terminal device or a network device. The communication device 1200 illustrated in FIG. 12 includes a processor 1210, and the processor 1210 may call and run a computer program from a memory to implement the method(s) in the embodiments of the present disclosure.

Optionally, as shown in FIG. 12, the communication device 1200 may further include a memory 1220. Herein, the processor 1210 may call and run a computer program from the memory 1220 to implement the method(s) in the embodiments of the present disclosure.

Herein, the memory 1220 may be a separate device independent of the processor 1210 or may be integrated in the processor 1210.

Optionally, as shown in FIG. 12, the communication device 1200 may further include a transceiver 1230. The processor 1210 may control the transceiver 1230 to communicate with other devices; specifically, the transceiver 1230 may transmit information or data to other devices or receive information or data from other devices.

Herein, the transceiver 1230 may include a transmitter and a receiver. The transceiver 1230 may further include one or more antennas.

Optionally, the communication device 1200 may specifically be the network device in the embodiments of the present disclosure, and the communication device 1800 may implement the corresponding processes implemented by the network device in each method of the embodiments of the present disclosure. For brevity, details will not be repeated herein again.

Optionally, the communication device 1200 may specifically be the mobile terminal/terminal device in the embodiments of the present disclosure, and the communication device 1200 may implement corresponding processes implemented by the mobile terminal/terminal device in each method of the embodiments of the present disclosure. For brevity, details will not be repeated herein again.

FIG. 13 is a schematic structural diagram of a chip according to an embodiment of the present disclosure. The chip 1300 shown in FIG. 13 includes a processor 1910, and the processor 1310 may call and run a computer program from a memory to implement the methods in the embodiments of the present disclosure.

Optionally, as shown in FIG. 13, the chip 1300 may further include a memory 1320. Herein, the processor 1310 may call and run the computer program from the memory 1320 to implement the methods in the embodiments of the present disclosure.

Herein, the memory 1320 may be a separate device independent of the processor 1310, or may be integrated into the processor 1310.

Optionally, the chip 1300 may further include an input interface 1330. Herein, the processor 1310 may control the input interface 1330 to communicate with other devices or chips. Specifically, the input interface 1330 may acquire information or data from other devices or chips.

Optionally, the chip 1300 may further include an output interface 1340. Herein, the processor 1310 may control the output interface 1340 to communicate with other devices or chips. Specifically, the output interface 1340 may output information or data to other devices or chips.

Optionally, the chip may be applied to the network device in the embodiments of the present disclosure, and the chip may implement the corresponding processes implemented by the network device in each method of the embodiments of the present disclosure. For brevity, details will not be repeated herein again.

Optionally, the chip may be applied to the mobile terminal/terminal device in the embodiments of the present disclosure, and the chip may implement the corresponding processes implemented by the mobile terminal/terminal device in each method of the embodiments of the present disclosure. For brevity, details will not be repeated herein again.

It should be understood that the chip referred to in the embodiments of the present disclosure may also be referred to as a system-level chip, a system chip, a chip system, or a system-on-chip chip, or the like.

An embodiment of the present disclosure also provides a computer storage medium, wherein one or more programs are stored in the computer storage medium, and the one or more programs can be executed by one or more processors to implement the method in the embodiment of the present disclosure.

FIG. 14 is a schematic block diagram of a communication system 1400 according to an embodiment of the present disclosure. As shown in FIG. 14, the communication system 1400 includes a terminal device 1410 and a network device 1420.

Herein, the terminal device 1410 may be configured to implement the corresponding functions implemented by the terminal device in the aforementioned method(s); and the network device 1420 may be configured to implement the corresponding functions implemented by the network device in the aforementioned method(s). For brevity, details will not be repeated herein again.

It should be understood that the processor in the embodiments of the present disclosure may be an integrated circuit chip and has a signal processing capability. During an implementation process, various operations in the aforementioned method embodiments may be completed by an integrated logic circuit of hardware or instructions in a software form in the processor. The foregoing processor may be a general-purpose processor, a Digital Signal Processor (DSP), an Application Specific Integrated Circuit (ASIC), a Field Programmable Gate Array (FPGA) or another programmable logical device, discrete gate or transistor logical device, or a discrete hardware component. The various methods, operations, and logical block diagrams disclosed in the embodiments of the present disclosure may be implemented or executed. The general-purpose processor may be a microprocessor, or the processor may also be any conventional processor, etc. The operations of the methods disclosed in combination with the embodiments of the present disclosure may be directly embodied to be executed and completed by a hardware decoding processor, or by a combination of hardware and software modules in the decoding processor. The software module may be located in a mature storage medium in the field, such as a random access memory, a flash memory, a read-only memory, a programmable read-only memory, an electrically erasable programmable memory, a register, or the like. The storage medium is located in a memory, and the processor reads information in the memory to complete the operations of the foregoing methods in combination with the hardware.

It may be understood that the memory in the embodiments of the present disclosure may be a transitory memory or a non-transitory memory, or may include both the transitory memory and the non-transitory memory. Herein, the non-transitory memory may be a ROM, a PROM, an Erasable PROM (EPROM), an Electrically EPROM (EEPROM), or a flash memory. The transitory memory may be a RAM that used as an external cache. By way of illustration but not limitation, many forms of RAMs may be available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that the above memories are examples but not limiting descriptions. For example, the memory in the embodiments of the present disclosure may also be an SRAM, a DRAM, an SDRAM, a DDR SDRAM, an ESDRAM, an SLDRAM, a DR RAM, and the like. That is, the memory in the embodiments of the present disclosure is intended to include, but is not limited to, these and any other suitable types of memories.

An embodiment of the present disclosure further provides a computer-readable storage medium configured to store a computer program.

Optionally, the computer-readable storage medium may be applied to the network device in the embodiments of the present disclosure, and the computer program is executed to enable a computer to perform the corresponding processes implemented by the network device in each method of the embodiments of the present disclosure. For brevity, details will not be repeated herein again.

Optionally, the computer-readable storage medium may be applied to the mobile terminal/terminal device in the embodiments of the present disclosure, and the computer program is executed to enable a computer to perform the corresponding processes implemented by the mobile terminal/terminal device in each method of the embodiments of the present disclosure. For brevity, details will not be repeated herein again.

An embodiment of the present disclosure further provides a computer program product, which includes computer program instructions.

Optionally, the computer program product may be applied to the network device in the embodiments of the present disclosure, and the computer program instructions are executed to enable a computer to perform the corresponding processes implemented by the network device in each method of the embodiments of the present disclosure. For brevity, details will not be repeated herein again.

Optionally, the computer program product may be applied to the mobile terminal/terminal device in the embodiments of the present disclosure, and the computer program instructions are executed to enable a computer to perform the corresponding processes implemented by the mobile terminal/terminal device in each method of the embodiments of the present disclosure. For brevity, details will not be repeated herein again.

An embodiment of the present disclosure further provides a computer program.

Optionally, the computer program may be applied to the network device in the embodiments of the present disclosure, and the computer program, when run on a computer, enables the computer to perform the corresponding processes implemented by the network device in each method of the embodiments of the present disclosure. For brevity, details will not be repeated herein again.

Optionally, the computer program may be applied to the mobile terminal/terminal device in the embodiments of the present disclosure, and the computer program, when run on a computer, enables the computer to perform the corresponding processes implemented by the mobile terminal/terminal device in each method of the embodiments of the present disclosure. For brevity, details will not be repeated herein again.

It may be appreciated by those skilled in the art that the various example units and algorithm operations described in conjunction with the embodiments disclosed herein may be implemented in electronic hardware or a combination of computer software and electronic hardware. Whether such functions are performed in hardware or software depends on specific applications and design constraints of the technical solution. The professionals may use different methods for specific applications to implement the described functions, but such implementation should not be considered beyond the scope of the present disclosure.

It may be clearly appreciated by those skilled in the art that, for convenience and conciseness of description, regarding the specific operating processes of the systems, apparatuses and units described above, reference may be made to the corresponding processes in the aforementioned method embodiments, which are not repeated herein.

In the several embodiments provided in the present disclosure, it should be understood that the disclosed systems, apparatuses and methods may be implemented by other ways. For example, the apparatus embodiments described above are only illustrative. For example, the division of the units is only a logical functional division, and in practice, there may be other divisions. For example, multiple units or components may be combined or integrated into another system, or some features may be ignored or not performed. In addition, the coupling or direct coupling or communication connection between the units and components illustrated or discussed may be indirect coupling or communication connection through some interfaces, apparatuses or units, and may be electrical, mechanical or other forms.

The units illustrated as separate components may or may not be physically separated, and the components displayed as units may or may not be physical units, i.e., the units and components may be located in one place, or may be distributed over multiple network units. A part or all of the units may be selected according to actual needs, to achieve the purposes of the solutions in the embodiments.

Furthermore, the functional units in the various embodiments of the present disclosure may be integrated in one processing unit, or the units may exist physically individually, or two or more units may be integrated in one unit.

The functions may be stored in a computer-readable storage medium if the functions are implemented in form of software functional units and sold or used as stand-alone products. Based on such understanding, the essence of the technical solutions of the present disclosure, or the part that contributes to the related art, or part of the technical solutions may be embodied in the form of a software product, and such computer software product is stored in a storage medium, and includes several instructions used to enable a computer device (which may be a personal computer, a server, or a network device, etc.) to implement all or part of the operations of the methods described in the various embodiments of the present disclosure. The aforementioned storage medium includes a Universal Serial Bus (USB) flash drive, a removable hard disk, a Read-Only Memory (ROM), a Random Access Memory (RAM), a magnetic disk, an optical disk, or any other medium that may store program codes.

The descriptions above are merely specific embodiments of the present disclosure, but the scope of protection of the present disclosure is not limited thereto. Any change or replacement readily contemplated by those skilled in the art within the technical scope disclosed in the present disclosure shall fall within the scope of protection of the present disclosure. Accordingly, the scope of protection of the present disclosure shall be subject to the scope of protection of the claims.

## Claims

1. A wireless communication method, comprising:
determining, by a terminal device, a time moment at which a first artificial intelligence (AI) model starts to be applied based on a model application time reported to a network device, or based on a model application time configured by the network device; and
communicating, by the terminal device after the time moment, with the network device by using the first AI model.

2. The method of claim 1, wherein the model application time is any one of the following:
a time interval between a time moment at which the terminal device receives first information and a time moment at which the first AI model is applied;
a time interval between a time moment at which the terminal device sends hybrid automatic repeat request-acknowledgement (HARQ-ACK) information for first information and a time moment at which the first AI model is applied;
a time interval between a time moment at which the terminal device receives first information and a time moment at which the terminal device sends feedback information that is obtained based on the first AI model; or
a time interval between a time moment at which the terminal device sends HARQ-ACK information for first information and a time moment at which the terminal device sends feedback information that is obtained based on the first AI model;
wherein the first information is downlink information used for configuring the first AI model, and the time interval is in units of slots or orthogonal frequency division multiplexing (OFDM) symbols.

3. The method of claim 1 or 2, wherein the time moment at which the first AI model starts to be applied is any one of the following:
a first slot or a first orthogonal frequency division multiplexing (OFDM) symbol that follows k OFDM symbols starting from a last OFDM symbol of an uplink channel carrying hybrid automatic repeat request-acknowledgement (HARQ-ACK) information for first information;
a first slot or a first OFDM symbol that follows k OFDM symbols starting from a last OFDM symbol of a downlink channel carrying first information;
a first slot that follows k slots starting from a slot in which the terminal device receives first information; or
a first slot that follows k slots or (k+3N) slots or max (k, 3N) slots starting from a slot in which an uplink channel carrying HARQ-ACK information for first information is located;
wherein the first information is downlink information used for configuring the first AI model, k is the model application time, and N is a number of slots comprised in 1 ms.

4. The method of claim 2 or 3, further comprising:
receiving, by the terminal device, the first information, the first information being the downlink information used for configuring the first AI model;
wherein the first information comprises one or more of the following:
identification information of the first AI model;
a model functionality of the first AI model;
a model structure of the first AI model; and
a model parameter of the first AI model.

5. The method of claim 1, wherein the model application time is any one of the following:
a time interval between a time moment at which the terminal device sends second information and a time moment at which the first AI model is applied;
a time interval between a time moment at which the terminal device sends second information and a time moment at which the terminal device sends feedback information that is obtained based on the first AI model;
a time interval between a time moment at which the terminal device receives response information for second information and a time moment at which the first AI model is applied; or
a time interval between a time moment at which the terminal device receives response information for second information and a time moment at which the terminal device sends feedback information that is obtained based on the first AI model;
wherein the second information is uplink information used for indicating the first AI model, and the time interval is in units of slots or orthogonal frequency division multiplexing (OFDM) symbols.

6. The method of claim 1 or 5, wherein the time moment at which the first AI model starts to be applied is any one of the following:
a first slot or a first orthogonal frequency division multiplexing (OFDM) symbol that follows k OFDM symbols starting from a last OFDM symbol of an uplink channel carrying second information;
a first slot or a first OFDM symbol that follows k OFDM symbols starting from a last OFDM symbol of response information for an uplink channel carrying second information;
a first slot that follows k slots starting from a slot in which the terminal device sends second information; or
a first slot that follows k slots or (k+3N) slots or max (k, 3N) slots starting from a slot in which a downlink channel carrying response information for second information is located;
wherein the second information is uplink information used for indicating the first AI model, k is the model application time, and N is a number of slots comprised in 1 ms.

7. The method of claim 5 or 6, further comprising:
sending, by the terminal device, the second information, the second information being the uplink information used for indicating the first AI model;
wherein the second information comprises one or more of the following:
identification information of the first AI model;
a model functionality of the first AI model;
a model structure of the first AI model; and
a model parameter of the first AI model.

8. The method of any one of claims 1 to 7, wherein the model application time reported to the network device comprises one or more of the following:
a model application time corresponding to each of one or more AI models supported by the terminal device, wherein the one or more AI models supported by the terminal device comprise the first AI model;
a model application time corresponding to each of one or more model functionalities supported by the terminal device, wherein the one or more model functionalities supported by the terminal device comprise a functionality of the first AI model;
a model application time corresponding to each of one or more model update modes supported by the terminal device, wherein the one or more model update modes supported by the terminal device comprise an update mode of the first AI model; and
a model application time corresponding to each of one or more model types supported by the terminal device, wherein the one or more model types supported by the terminal device comprise a type of the first AI model.

9. The method of claim 8, wherein the one or more model update modes comprise an updating model parameter and/or an updating model structure.

10. The method of claim 8 or 9, wherein the one or more model types comprise:
a high-precision model and a low-precision model; or, a known model and an unknown model.

11. The method of any one of claims 1 to 10, wherein the time moment at which the first AI model starts to be applied and/or the model application time is determined based on any one of the following:
a subcarrier spacing of a downlink channel carrying first information;
a subcarrier spacing of an uplink channel carrying second information;
a subcarrier spacing of an uplink channel carrying hybrid automatic repeat request-acknowledgement (HARQ-ACK) information for first information;
a subcarrier spacing of a downlink channel carrying response information for second information; or
a subcarrier spacing of a bandwidth part (BWP) that is activated on a carrier to which the first AI model is applied;
wherein the first information is downlink information used for configuring the first AI model, and the second information is uplink information used for indicating the first AI model.

12. The method of claim 11, wherein there are a plurality of carriers to which the first AI model is applied;
the time moment at which the first AI model starts to be applied and/or the model application time is determined based on a first subcarrier spacing, and the first subcarrier spacing is a minimum subcarrier spacing among BWPs that are respectively activated on the plurality of carriers to which the first AI model is applied.

13. The method of any one of claims 1 to 12, wherein before applying the first AI model, the terminal device performs information transmission with the network device based on a third AI model; or the terminal device does not perform information transmission with the network device based on an AI model; and
wherein the third AI model is a predefined AI model or a historical AI model.

14. A wireless communication method, comprising:
determining, by a network device, a time moment at which a first artificial intelligence (AI) model starts to be applied based on a model application time reported by a terminal device, or based on a model application time configured for the terminal device; and
communicating, by the network device after the time moment, with the terminal device by using a second AI model corresponding to the first AI model.

15. The method of claim 14, wherein the model application time is any one of the following:
a time interval between a time moment at which the terminal device receives first information and a time moment at which the first AI model is applied;
a time interval between a time moment at which the terminal device sends hybrid automatic repeat request-acknowledgement (HARQ-ACK) information for first information and a time moment at which the first AI model is applied;
a time interval between a time moment at which the terminal device receives first information and a time moment at which the terminal device sends feedback information that is obtained based on the first AI model; or
a time interval between a time moment at which the terminal device sends HARQ-ACK information for first information and a time moment at which the terminal device sends feedback information that is obtained based on the first AI model;
wherein the first information is downlink information used for configuring the first AI model, and the time interval is in units of slots or orthogonal frequency division multiplexing (OFDM) symbols.

16. The method of claim 14 or 15, wherein the time moment at which the first AI model starts to be applied is any one of the following:
a first slot or a first orthogonal frequency division multiplexing (OFDM) symbol that follows k OFDM symbols starting from a last OFDM symbol of an uplink channel carrying hybrid automatic repeat request-acknowledgement (HARQ-ACK) information for first information;
a first slot or a first OFDM symbol that follows k OFDM symbols starting from a last OFDM symbol of a downlink channel carrying first information;
a first slot that follows k slots starting from a slot in which the terminal device receives first information; or
a first slot that follows k slots or (k+3N) slots or max (k, 3N) slots starting from a slot in which an uplink channel carrying HARQ-ACK information for first information is located;
wherein the first information is downlink information used for configuring the first AI model, k is the model application time, and N is a number of slots comprised in 1 ms.

17. The method of claim 15 or 16, further comprising:
sending, by the network device, the first information to the terminal device, the first information being a downlink used for configuring the first AI model;
wherein the first information comprises one or more of the following:
identification information of the first AI model;
a functionality of the first AI model;
a model structure of the first AI model; and
a model parameter of the first AI model.

18. The method of claim 14, wherein the model application time is any one of the following:
a time interval between a time moment at which the terminal device sends second information and a time moment at which the first AI model is applied;
a time interval between a time moment at which the terminal device sends second information and a time moment at which the terminal device sends feedback information that is obtained based on the first AI model;
a time interval between a time moment at which the terminal device receives response information for second information and a time moment at which the first AI model is applied; or
a time interval between a time moment at which the terminal device receives response information for second information and a time moment at which the terminal device sends feedback information that is obtained based on the first AI model;
wherein the second information is uplink information used for indicating the first AI model, and the time interval is in units of slots or orthogonal frequency division multiplexing (OFDM) symbols.

19. The method of claim 14 or 18, wherein the time moment at which the first AI model starts to be applied is any one of the following:
a first slot or a first orthogonal frequency division multiplexing (OFDM) symbol that follows k OFDM symbols starting from a last OFDM symbol of an uplink channel carrying second information;
a first slot or a first OFDM symbol that follows k OFDM symbols starting from a last OFDM symbol of response information for an uplink channel carrying second information;
a first slot that follows k slots starting from a slot in which the terminal device sends second information; or
a first slot that follows k slots or (k+3N) slots or max (k, 3N) slots starting from a slot in which a downlink channel carrying response information for second information is located;
wherein the second information is uplink information used for indicating the first AI model, k is the model application time, and N is a number of slots comprised in 1 ms.

20. The method of claim 18 or 19, further comprising:
receiving, by the network device, the second information from the terminal device, the second information being the uplink information used for indicating the first AI model;
wherein the second information comprises one or more of the following:
identification information of the first AI model;
a model functionality of the first AI model;
a model structure of the first AI model; and
a model parameter of the first AI model.

21. The method of any one of claims 14 to 20, wherein the model application time reported by the terminal device comprises one or more of the following:
a model application time corresponding to each of one or more AI models supported by the terminal device, wherein the one or more AI models supported by the terminal device comprise the first AI model;
a model application time corresponding to each of one or more model functionalities supported by the terminal device, wherein the one or more model functionalities supported by the terminal device comprise a functionality of the first AI model;
a model application time corresponding to each of one or more model update modes supported by the terminal device, wherein the one or more model update modes supported by the terminal device comprise an update mode of the first AI model; and
a model application time corresponding to each of one or more model types supported by the terminal device, wherein the one or more model types supported by the terminal device comprise a type of the first AI model.

22. The method of claim 21, wherein the one or more model update modes comprise an updating model parameter and/or an updating model structure.

23. The method of claim 21 or 22, wherein the one or more model types comprise:
a high-precision model and a low-precision model; or, a known model and an unknown model.

24. The method of any of claims 14 to 23, wherein
the model application time configured by the network device for the terminal device is determined based on the model application time reported by the terminal device.

25. The method of any one of claims 14 to 24, wherein
a duration of the model application time configured by the network device for the terminal device is greater than or equal to a duration of the model application time reported by the terminal device.

26. The method of any one of claims 14 to 25, wherein the time moment at which the first AI model starts to be applied and/or the model application time is determined based on any one of the following:
a subcarrier spacing of a downlink channel carrying first information;
a subcarrier spacing of an uplink channel carrying second information;
a subcarrier spacing of an uplink channel carrying hybrid automatic repeat request-acknowledgement (HARQ-ACK) information for first information;
a subcarrier spacing of a downlink channel carrying response information for second information; or
a subcarrier spacing of a bandwidth part (BWP) that is activated on a carrier to which the first AI model is applied;
wherein the first information is downlink information used for configuring the first AI model, and the second information is uplink information used for indicating the first AI model.

27. The method of claim 26, wherein there are a plurality of carriers to which the first AI model is applied;
the time moment at which the first AI model starts to be applied and/or the model application time is determined based on a first subcarrier spacing, and the first subcarrier spacing is a minimum subcarrier spacing among BWPs that are respectively activated on the plurality of carriers to which the first AI model is applied.

28. The method of any one of claims 14 to 27, wherein before applying the first AI model, the network device performs information transmission with the terminal device based on a fourth AI model corresponding to a third AI model, or the network device does not perform information transmission with the terminal device based on an AI model; and
wherein the third AI model is a predefined model or a historical AI model.

29. A wireless communication apparatus, applied to a terminal device, the apparatus comprising:
a first determination unit, configured to determine a time moment at which a first artificial intelligence (AI) model starts to be applied based on a model application time reported to a network device, or based on a model application time configured by the network device;
a first communication unit, configured to communicate, after the time moment, with the network device by using the first AI model.

30. A wireless communication apparatus, applied to a network device, the apparatus comprising:
a second determination unit, configured to determine a time moment at which a first artificial intelligence (AI) model starts to be applied based on a model application time reported by a terminal device, or based on a model application time configured for the terminal device;
a second communication unit, configured to communicate, after the time moment, with the terminal device by using a second AI model corresponding to the first AI model.

31. A terminal device, comprising:
a memory, configured to store computer-executable instructions;
a processor, coupled to the memory;
wherein the processor is configured to execute the computer-executable instructions to implement the method of any one of claims 1 to 13.

32. A network device, comprising:
a memory, configured to store computer-executable instructions;
a processor, coupled to the memory;
wherein the processor is configured to execute the computer-executable instructions to implement the method of any one of claims 14 to 28.

33. A chip, comprising:
a processor, configured to call and run a computer program from a memory, to enable a device installed with the chip to perform the method of any one of claims 1 to 13, or the method of any one of claims 14 to 28.

34. A computer-readable storage medium, storing a computer program thereon, wherein the computer program, when being executed by at least one processor, enables the at least one processor to implement the method of any one of claims 1 to 13, or the method of any one of claims 14 to 28.

35. A computer program product, comprising a computer storage medium, wherein the computer storage medium stores a computer program thereon, and the computer program comprises instructions executable by at least one processor that, when being executed by the at least one processor, implement the method of any one of claims 1 to 13 or the method of any one of claims 14 to 28.

36. A computer program, wherein the computer program enables a computer to perform a method of any one of claims 1 to 13 or the method of any one of claims 14 to 28.
